Europäisches Patentamt

European Patent Office

Office européen des brevets

(11) Numéro de publication: **0 560 873 B1**

(12) **FASCICULE DE BREVET EUROPEEN**

(45) Date de publication de fascicule du brevet: **08.03.95**  (51) Int. Cl.6: **A23P 1/16, A23L 1/314**

(21) Numéro de dépôt: **92901136.9**

(22) Date de dépôt: **29.11.91**

(86) Numéro de dépôt internationale :
**PCT/FR91/00954**

(87) Numéro de publication internationale :
**WO 92/09213 (11.06.92 92/13)**

Le dossier contient des informations techniques présentées postérieurement au dépôt de la demande et ne figurant pas dans le présent fascicule.

(54) **PROCEDE ET DISPOSITIF DE FABRICATION ET DE CONDITIONNEMENT D'UNE PREPARATION ALIMENTAIRE FOISONNEE STERILE, ET PREPARATION ALIMENTAIRE FOISONNEE STERILE OBTENUE AVEC UN TEL PROCEDE.**

(30) Priorité: **03.12.90 FR 9015124**

(43) Date de publication de la demande:
**22.09.93 Bulletin  93/38**

(45) Mention de la délivrance du brevet:
**08.03.95 Bulletin  95/10**

(84) Etats contractants désignés:
**AT BE CH DE DK ES FR GB GR IT LI LU NL SE**

(56) Documents cités:
**EP-A- 0 274 348**
**GB-A- 2 141 917**
**US-A- 3 615 583**
**US-A- 4 478 867**

(73) Titulaire: **AJMB**
**Rue ST-Eloi**
**F-71300 Montceau-les-Mines (FR)**

(72) Inventeur: **BOSSU, Jean-Marie**
**11, rue de la Sourdière**
**F-75001 Paris (FR)**
Inventeur: **BOSSU, Annie**
**11, rue de la Sourdière**
**F-75001 Paris (FR)**

(74) Mandataire: **Benech, Frédéric et al**
**Ernest Gutmann - Yves Plasseraud S.A.**
**3, rue Chauveau-Lagarde**
**F-75008 Paris (FR)**

Rank Xerox (UK) Business Services
(3. 10/3.09/3.3.3)

**Description**

La présente invention concerne un procédé et un dispositif de fabrication et de conditionnement d'une préparation foisonnée stérile à base d'au moins un produit alimentaire, et une préparation alimentaire obtenue par la mise en oeuvre d'un tel procédé.

La préparation alimentaire foisonnée stérile peut être, par exemple, à base de viande, de poisson, de produits laitiers, de fruits, de chocolat, de légumes ou d'un mélange de ces produits.

Par préparation alimentaire stérile, on entend dans le cadre de l'invention, une préparation répondant aux normes en vigueur dans le domaine des produits alimentaires stériles. A cet égard, on peut faire référence aux définitions données dans des ouvrages tels que LE NOUVEAU DEHOVE - Commerce Edition Paris par Raymond A. DEHOVE (1984). Il s'agit, notamment, de produits qui ont été "stérilisés" en les portant à une température supérieure à 100°C.

Par préparation alimentaire foisonnée on entend une préparation alimentaire de structure hétérogène contenant un produit alimentaire de texture plus ou moins pâteuse, allant du liquide au solide, constituant la phase continue, et un gaz ou de l'air formant la phase dispersée.

On se reportera également aux définitions de la littérature sur les préparations alimentaires foisonnées, également identifiées comme étant des "mousses" alimentaires colloïdales.

L'invention trouve une application particulièrement importante bien que non exclusive, dans le domaine des préparations alimentaires à base de produits carnés, se présentant sous forme de mousses foisonnées, et par exemple destinées à l'usage de personnes ayant des problèmes masticatoires comme les bébés ou les gens agés.

On connaît déjà un procédé pour la préparation d'un produit diététique foisonnée stérile (EP-A-0.274.348), mais ce procédé ne concerne pas des préparations alimentaires de produits finis beaucoup plus complexes qu'une solution aqueuse de polysaccharide par exemple.

On connaît déjà et également des procédés et dispositifs de fabrication en continu d'une préparation alimentaire foisonnée non stérile. Par exemple, on connait un procédé du type dans lequel on forme une pâte en mélangeant le produit alimentaire, préalablement haché s'il y a lieu, avec une base foisonnante comprenant au moins un agent tensio-actif moussant et au moins un agent stabilisant de texture. On alimente ensuite en continu avec la pâte un premier échangeur de chaleur dit échangeur de chaleur à surface raclée, où la pâte est brassée à une première température, pendant un premier temps déterminé.

Un échangeur à surface raclée est un échangeur connu de l'art antérieur, constitué par deux tubes coaxiaux horizontaux ou verticaux. Le tube intérieur dans lequel s'écoule le produit à traiter, est raclé par des lames ou couteaux fixés à un rotor central. Le fluide thermique (vapeur, eau froide, eau chaude, etc...) circule à contre-courant ou à co-courant dans l'espace annulaire entre les deux tubes.

Dans ce procédé de type connu, on alimente ensuite en continu à partir du premier échangeur à surface raclée, avec la pâte, un deuxième échangeur de chaleur à surface raclée, où ladite pâte est à nouveau brassée ou raclée pendant un deuxième temps déterminé en la chauffant à une deuxième température.

Simultanément, au passage de la pâte dans ces échangeurs, on injecte en continu un gaz inerte dans la pâte avec un débit déterminé, fonction du débit d'alimentation de la pâte; on alimente enfin en continu avec la pâte, un troisième échangeur de chaleur à surface raclée, où l'on brasse ladite pâte pendant un troisième temps déterminé en la refroidissant à une troisième température.

Ce type de procédé est actuellement connu pour les préparations pasteurisées.

Il existe également d'autres procédés et dispositifs appliqués à la fabrication de préparations stériles non foisonnées, comme par exemple décrits dans le document GB-A-2.141917.

Tous ces procédés connus présentent actuellement des inconvénients. En effet, ils ne permettent pas d'obtenir des produits alimentaires qui soient à la fois foisonnés et stériles.

En particulier, un procédé tel que celui du type décrit ci-dessus, n'est pas connu pour la fabrication de préparations stériles. Son utilisation ne pouvait, en effet, venir à l'idée de l'homme du métier compte tenu notamment, des résultats de diverses études, qui montraient que chauffer une pâte foisonnée à une température supérieure à de l'ordre de 80°C, semblait empêcher l'obtention d'une préparation alimentaire foisonnée de qualité satisfaisante. En effet, il a été par exemple observé que, lorsque l'on porte à une température supérieure à 100°C une mousse foisonnée, de densité inférieure à 1, et notamment inférieure à 0,7 par rapport à l'eau, la préparation a tendance d'une part à perdre sa consistance de mousse pour prendre celle d'un pâté classique, et d'autre part à présenter de moins bonnes qualités organoleptiques.

Par ailleurs, le conditionnement d'une préparation alimentaire foisonnée stérile ayant toujours paru poser des problèmes de mise en oeuvre à l'homme du métier, la fabrication d'une telle préparation ne semblait pas pouvoir être exploitée industriellement et n'était donc pas envisagée de ce fait.

La présente invention vise à fournir un procédé, un dispositif et une préparation alimentaire répondant mieux que ceux antérieurement connus aux exigences de la pratique, notamment en ce qu'ils autorisent la fabrication et le conditionnement d'une préparation alimentaire à la fois foisonnée et stérile, de façon fiable, tout en répondant aux normes de santé en vigueur et en permettant une production industrielle de préparations alimentaires en grandes quantités.

On rappelle que le foisonnement est le rapport volume donné/poids et équivaut à la densité.

Dans ce but, l'invention propose notamment un procédé de fabrication et de conditionnement d'une préparation foisonnée stérile à base d'au moins un produit alimentaire de base notamment inclu dans les produits envisagés, caractérisé en ce que

à partir d'une pâte préparée en mélangeant le produit alimentaire, préalablement haché s'il y a lieu, avec une base foisonnante comprenant au moins un agent tensio-actif moussant et au moins un agent stabilisant de texture,

on réalise un traitement thermique de destruction bactérienne et de cuisson de la pâte comprenant une étape de brassage dans un échangeur à surface raclée de ladite pâte en la chauffant à une température comprise entre de l'ordre de 100 ° C et de l'ordre de 130 ° C pendant un temps déterminé, en injectant un gaz dans ladite pâte pendant ledit traitement thermique, pour obtenir une préparation foisonnée stérile,

puis on refroidit la préparation à une température inférieure à de l'ordre de 40 ° C,

les agents étant dans des proportions telles que, compte tenu des quantités de gaz injecté et de pâte mises en oeuvre, la préparation foisonnée formée après refroidissement a une densité par rapport à l'eau inférieure à 1, de préférence inférieure à 0,9 et de façon particulièrement avantageuse inférieure à 0,7,

et en ce que on conditionne ladite préparation foisonnée après refroidissement dans des récipients préalablement stérilisés, que l'on scelle ensuite de façon hermétique et stérile, de sorte qu'on obtient ainsi des portions de préparation foisonnée stérile conditionnées, de longue conservation à température ambiante.

En effet, de façon surprenante, les inventeurs ont d'abord pu montrer qu'en augmentant la température du traitement thermique de la pâte au-delà de 100 ° C, dans un échangeur de chaleur à surface raclée et dans les conditions indiquées ci-dessus, la forme et la consistance de mousse de la préparation foisonnée obtenue restait satisfaisante, et ce contrairement aux idées reçues.

Ensuite, les inventeurs ont réussi à effectuer un conditionnement de la préparation obtenue avec des équipements autorisant de grands débits de traitement, démontrant ainsi la faisabilité d'un conditionnement en grande quantité d'une préparation foisonnée stérile. Ce faisant, ils ont donc abouti à la présente invention résidant notamment dans la combinaison de la fabrication d'une préparation alimentaire foisonnée stérile avec un conditionnement de ladite préparation, c'est-à-dire une mise en récipients fermés permettant une conservation de longue durée de la préparation, par exemple pouvant aller jusqu'à 6 mois ou 1 an, et ce encore une fois , à l'encontre des idées reçues dans ce domaine.

Dans un mode de réalisation avantageux, le traitement thermique de destruction bactérienne et de cuisson comprend une première étape où on brasse la pâte alimentée en continu dans un premier échangeur à surface raclée, en chauffant la dite pâte à une température comprise entre de l'ordre de 50 ° C et de l'ordre de 80 ° C, pendant un premier temps déterminé,

et une deuxième étape où on brasse ladite pâte alimentée en continu à partir du premier échangeur, dans un deuxième échangeur à surface raclée, en chauffant la pâte à la dite température comprise entre de l'ordre de 100 ° C et de l'ordre de 130 ° C, pendant un deuxième temps déterminé,

le refroidissement étant effectué dans un troisième échangeur à surface raclé, alimenté en continu à partir du deuxième échangeur, où on brasse la pâte pendant un troisième temps déterminé.

La mise en oeuvre de ces trois étapes, où sont respectées les conditions de températures sus indiquées, permet d'obtenir une préparation alimentaire foisonnée stérile de très bonne texture qui se maintient particulièrement bien au cours du temps.

Avantageusement, les temps déterminés sont compris entre de l'ordre de 1 minute et de l'ordre de 5 minutes.

Les temps déterminés sont des temps moyens (t) de séjour. Ils sont calculés à partir du débit massique M de la préparation, de la moyenne $\rho$ des masses volumiques de la préparation à l'entrée et à la sortie de l'échangeur, et du volume interne V de l'échangeur.

$$t \text{ séjour } = \rho \frac{x V}{M}$$

Les temps déterminés sont par exemple exprimés avec les unités suivantes :

$$[mn] = \frac{[m3] \; [kg/m3]}{[kg/mn]}$$

L'invention propose également un procédé de fabrication et de conditionnement en continu d'une préparation foisonnée à base d'au moins un produit alimentaire, du type défini ci-dessus, c'est-à-dire dans lequel :

on forme une pâte en mélangeant le produit alimentaire, préalablement haché s'il y a lieu, avec une base foisonnante comprenant au moins un agent tensio-actif moussant et au moins un agent stabilisant de texture choisi notamment parmi les gommes,

on alimente en continu avec ladite pâte un premier échangeur de chaleur à surface raclée, où on brasse ladite pâte pendant un premier temps déterminé en chauffant la pâte à une première température,

on alimente ensuite en continu avec la pâte ainsi obtenue un deuxième échangeur de chaleur à surface raclée, où on brasse ladite pâte ainsi obtenue pendant un deuxième temps déterminé en chauffant la pâte à une deuxième température,

on injecte en continu un gaz inerte dans la pâte simultanément à son alimentation, en amont et/ou en aval du premier et/ou du deuxième échangeur, avec un débit déterminé fonction du débit d'alimentation de ladite pâte,

puis on alimente en continu avec la pâte un troisième échangeur de chaleur à surface raclée, où on brasse ladite pâte pendant un troisième temps déterminé en refroidissant la pâte à une troisième température,

ledit procédé étant caractérisé

en ce que les agents sont dans des proportions telles que, compte tenu des quantités de gaz injecté et de pâte mises en oeuvre, la préparation foisonnée formée a une densité par rapport à l'eau inférieure à 1, de préférence entre 0,9 et 0,3 et de façon particulièrement avantageuse inférieure à 0,7,

en ce que la première température est comprise entre de l'ordre de 50°C et de l'ordre de 80°C,

la deuxième température est comprise entre de l'ordre de 100°C et de l'ordre de 130°C,

et la troisième température est comprise entre de l'ordre de 10°C et de l'ordre de 40°C,

lesdits temps déterminés, de durée moyenne de brassage, étant compris entre de l'ordre de 1mn et de l'ordre de 5 mn,

de sorte qu'on obtient une préparation foisonnée stérile à partir de ladite pâte,

et en ce que on achemine en milieu aseptique ladite préparation foisonnée stérile, immédiatement après refroidissement, à une unité de conditionnement située à proximité dudit troisième échangeur,

on conditionne la préparation, en alimentant automatiquement en milieu aseptique avec ladite préparation, des récipients préalablement stérilisés, scellés ensuite de façon hermétique et stérile,

de sorte qu'on obtient ainsi des portions de préparation foisonnée stérile conditionnées, de longue conservation à température ambiante.

Dans des modes de réalisation avantageux on a recours à l'une ou/et à l'autre des dispositions suivantes:

- le produit alimentaire est carné;
- la deuxième température est supérieure à 120°C et avantageusement égale à de l'ordre de 125°C;
- la base foisonnante comprend plusieurs agents tensio-actifs moussants choisis parmi le caséinate de sodium, le blanc d'oeuf, l'isolat de lactosérum, l'isolat de soja, l'isolat de pois, le lait écrémé en poudre, le plasma de sang de porc en poudre, de préférence de façon à ce que la quantité de protéines pures apportée soit inférieure à 10%, et avantageusement égale à de l'ordre de 6% en poids total de la préparation;
- la base foisonnante comprend plusieurs agents stabilisants de texture choisis parmi les gommes telles que le xanthane, le guar, les carraghénanes, ces agents stabilisants étant dans une proportion d'environ 0,1% à 1%, et avantageusent 0,5% en poids total de la préparation.
- la base foisonnante comprend :
  - entre 0,5 et 2% en poids, de préférence entre 1 et 1,5% de caséinate de sodium,
  - entre 0,5 et 2% en poids, de préférence entre 1 et 1,5% de blanc d'oeuf en poudre,
  - entre 2 et 6% en poids, de préférence entre 4 et 5% d'isolat de lactosérum,
  - entre 1 et 3% en poids, de préférence 2% à 3% de maltodextrines, et
  - entre 0,2 et 1% en poids, de préférence 0,5% de Carraghénanes.

4

EP 0 560 873 B1

On incorpore à la pâte comprenant le produit, préalablement haché s'il y a lieu, des morceaux entiers dudit produit, avant le traitement thermique. Ces morceaux peuvent par exemple être des cubes de 2cm x 2cm.

L'invention propose également un dispositif de fabrication en continu d'une préparation alimentaire foisonnée à partir d'une pâte préparée en mélangeant au moins un produit alimentaire, préalablement haché s'il y a lieu, avec une base foisonnante comprenant au moins un agent tensio-actif moussant et au moins un agent stabilisant de texture, le dispositif comprenant :

- des moyens d'alimentation en pression et en continu à un débit déterminé, avec ladite pâte, d'un premier échangeur de chaleur à surface raclée,
- deux échangeurs à surface raclée de traitement thermique et de cuisson de la pâte, à savoir ledit premier échangeur, et un deuxième échangeur,
- un troisième échangeur de refroidissement de la pâte, et
- des moyens d'injection d'un gaz dans la pâte avec un débit déterminé fonction du débit d'alimentation de ladite pâte,

caractérisé en ce que le dispositif comprend :

- des moyens de chauffage de la pâte dans le premier échangeur, à une température comprise entre de l'ordre de 40° C et de l'ordre de 80° C, et dans le deuxième échangeur à une température comprise entre de l'ordre de 100° C et de l'ordre de 130° C,
- des moyens de refroidissement de la pâte dans le troisième échangeur, à une température inférieure à de l'ordre de 40° C,

de sorte qu'on obtient une préparation foisonnée stérile à partir de ladite pâte, propre à être conditionnée, et en ce qu'il comporte

- des moyens d'acheminement en milieu aseptique de ladite préparation foisonnée stérile, immédiatement après refroidissement, à une unité de conditionnement située à proximité dudit troisième échangeur,
- et ladite unité de conditionnement comprenant des moyens d'alimentation automatique en milieu aseptique avec ladite préparation, de récipients préalablement stérilisés et des moyens de scellement de façon automatique, hermétique et stérile desdits récipients,

de sorte qu'on obtient ainsi des portions de préparation foisonnée stérile conditionnées dans lesdits récipients scellés, de longue conservation à température ambiante.

Avantageusement le dispositif est appliqué à la fabrication d'une préparation foisonnée stérile à base de produits carnés comme par exemple, le jambon.

Dans un autre mode de réalisation avantageux, le dispositif comporte de plus un quatrième échangeur de chaleur à surface raclée, de chauffage progressif et de cuisson de la pâte.

Avantageusement, les surfaces d'échange de chaleur des échangeurs à surface raclée du dispositif selon l'invention, sont dans les proportions suivantes :

| | |
|---|---|
| 1er échangeur : | a x m2 |
| 2ème échangeur : | a x m2 |
| troisième échangeur: | a x 1,5 x m2 |

a indiquant une surface variable, par exemple comprise entre 0,12 m2 et 1,7m2.

L'invention concerne également une préparation alimentaire telle qu'obtenue par la mise en oeuvre du procédé de fabrication décrit précédemment.

Cette préparation alimentaire peut également être définie comme étant une préparation alimentaire foisonnée à base de viande, de poisson, de produit laitier, de fruit, de légume, de chocolat ou d'un mélange de plusieurs de ces produits, caractérisée en ce qu'elle est stérile et en ce qu'elle contient une base foisonnante comprenant :

a) un ou plusieurs agents tensio-actifs moussants, résistants à une température supérieure à 100° C, de préférence à une température voisine de 120° C choisis notamment parmi les protéines,

b) un ou plusieurs agents stabilisants de texture choisis notamment parmi les gommes,

les agents a) et b) étant dans des proportions telles que la préparation alimentaire formée à une densité inférieure à 1, de préférence entre 0,9 et 0,3 et de façon particulièrement avantageuse, inférieure à 0,7.

Avantageusement cette invention est telle qu'obtenue par,

- mélange d'un ou plusieurs de ces produits avec une base foisonnante comprenant :

a) un ou plusieurs agents tensio-actifs moussants, résistants à une température supérieure à 100° C, de préférence autour de 120° C choisis notamment parmi les protéines,

b) un ou plusieurs agents stabilisants de texture choisis notamment parmi les gommes, les agents a) et b) étant dans des proportions telles que la préparation alimentaire formée à une densité inférieure à 1, de préférence entre 0,9 et 0,3 et de façon particulièrement avantageuse, inférieure à 0,7.

5

- stérilisation par chauffage à une température comprise entre de l'ordre de 100°C et de l'ordre de 130°C pendant un temps supérieur à de l'ordre de 1 mn.

Les préparations alimentaires selon l'invention se présentent sous forme de mousse et peuvent être utilisées dans des circonstances tout à fait diverses notamment pour l'alimentation en régime hospitalier. Ces mousses étant présentées sous forme de produits stériles, les agents tensio-actifs utilisables pour la réalisation de cette préparation doivent être capables de résister à une température appliquée notamment en phase de stérilisation du produit.

Eventuellement certains produits de la préparation alimentaire sont présents sous forme de morceaux.Dans ce cas, la quantité de morceaux est avantageusement inférieure à 25% en poids total.

On note que les préparations de l'invention présentent des qualités organoleptiques et nutritionnelles tout à fait intéressantes et en particulier que les vitamines et sels minéraux sont préservés.

Comme indiqué ci-avant, par produit stérile on entend dans le cadre de l'invention, un produit répondant aux normes en vigueur dans le domaine des produits alimentaires stériles.

Pour obtenir un produit dont la densité est égale à l'une des valeurs précédentes, on tiendra compte des quantités respectives de matière première alimentaire et de gaz inerte injecté pour la réalisation de la préparation foisonnée. Le foisonnement est également influencé par la température du produit à la sortie du dispositif de préparation de la mousse. Un refroidissement efficace permet, avec la vitesse et la contrainte de cisaillement ainsi que la viscosité du produit, d'améliorer le degré de foisonnement.

Les proportions respectives des agents tensio-actifs moussants et des agents stabilisants de texture sont également déterminées notamment en fonction de la nature de la matière première utilisée pour la réalisation de la préparation alimentaire. On peut par exemple prévoir que selon la teneur en lipides des produits de base, une quantité plus ou moins importante d'agents stabilisants et moussants devra être ajoutée. En effet les lipides peuvent dans certaines conditions nuire aux propriétés moussantes.

Selon un mode de réalisation préféré de l'invention, on utilisera plusieurs agents moussants tensio-actifs en mélange et plusieurs agents stabilisants de texture également en mélange. De tels mélanges d'ingrédients dans la base foisonnante peuvent améliorer la stabilité de certaines mousses, même lorsqu'elles sont préparées à partir d'aliments ayant une tendance à être instable.

Par produit stable, on entend un produit dont le caractère stérile et les qualités organoleptiques sont maintenus pendant la conservation dans des conditions données dans les pages précédentes.

Le foisonnement, déterminé par la densité de la préparation alimentaire formée peut varier en fonction des matières premières utilisées. Ainsi pour la réalisation d'une mousse de jambon comportant peu (moins de 25%) de morceaux de viande à l'état final, on pourra avantageusement obtenir une densité de 0,7 ou une densité pouvant aller jusqu'à 0,3.

Les différents paramètres seront donc ajustés par l'homme du métier en fonction du produit alimentaire de base utilisé, et en fonction du foisonnement souhaité.

Une préparation alimentaire foisonnée stérile préférée selon l'invention est telle que sa teneur en lipides est inférieure à 20% de préférence située autour de 10% en poids total de composition.

Selon leur destination, les préparations alimentaires foisonnées peuvent aussi avoir un taux en lipides voisin de 0. Pour certaines des préparations, par exemple à usage hospitalier, la teneur en lipides peut être comprise entre 5 et 6% de préférence autour de 5,5% du poids total. La quantité d'eau en poids incorporée à la pâte pour constituer le produit devra avantageusement être supérieure à 35% au poids de la pâte, et plus particulièrement de l'ordre de 40% à 45%. On peut par ailleurs jouer sur le caractère plus ou moins liquide de la pâte en rajoutant des colloïdes comme la gomme arabique notamment avec une quantité inférieure de l'ordre de 1% au poids de la pâte. Dans le cas où le taux de lipide est voisin de 0, la quantité en poids d'eau rajoutée pourrait être de l'ordre de 55%.

La nature des lipides mis en oeuvre dans le cadre de la préparation des mousses alimentaires de l'invention peut également présenter une certaine importance. De façon générale les lipides diminuent les propriétés moussantes des protéines et il pourra être avantageux selon la nature des matières premières utilisées, d'employer des lipides d'origine différente. Par exemple pour la préparation de mousse de poisson on pourra avantageusement utiliser des graisses et huiles non polaires telles que les huiles végétales.

Cette qualité particulière permet de concevoir dans le cadre de l'invention, des produits alimentaires dits allégés (en fonction de leur teneur en lipides) et notamment des produits alimentaires ayant une valeur énergétique inférieure à 200 kcal/100g. L'invention permet donc la réalisation de préparations alimentaires dites diététiques.

Eventuellement une partie des lipides peut être substituée par un agent de change comme le sirop de glucose.

Le cas échéant les matières premières telles que la viande, les produits laitiers, les fruits, les légumes ou le chocolat peuvent subir un prétraitement avant d'être préparées selon le procédé de fabrication de l'invention pour obtenir les préparations alimentaires ci-dessus.

En particulier pour la préparation alimentaire de l'invention on pourra utiliser de la viande préalablement cuisinée selon un procédé choisi, ou on pourra utiliser les matières premières déjà mélangées avec certains agents par exemple avec des arômes notamment sur support d'alcool et/ou avec divers assaisonnements.

A titre d'exemple des agents tensio-actifs moussants utilisables pour la mise en oeuvre de l'invention sont choisis parmi le caséinate de sodium, le blanc d'oeuf, l'isolat de lactosérum, l'isolat de soja, l'isolat de pois, le lait écrémé en poudre, le plasma de sang de porc en poudre, de préférence de façon à ce que la quantité de protéines pures apportée soit inférieure à 10%, de façon particulièrement avantageuse de l'ordre de 6% en poids total.

Des mélanges particulièrement intéressants pour la mise au point des préparations selon l'invention sont caractérisés en ce qu'ils contiennent du caséinate de sodium, du blanc d'oeuf en poudre, et un isolat de lactosérum. Avantageusement un mélange comprenant ces constituants formera environ 10%, de préférence 6% de la préparation alimentaire, ceci en poids total.

De façon particulièrement préférée la proportion d'isolat de lactosérum est supérieure, par exemple 4 fois supérieure, à celle de caséinate et/ou de blanc d'oeuf en poudre. Le blanc d'oeuf et le caséinate peuvent être utilisés en proportion relativement identique.

Le choix des différents agents tensio-actifs moussants peut être réalisé en tenant compte des propriétés des matières premières utilisées. A titre d'exemple on peut citer que le blanc d'oeuf en poudre constitue un agent moussant intéressant pour la plupart des aliments. Le plasma de porc en poudre peut être utilisé de façon avantageuse pour la réalisation de préparations alimentaires contenant de la viande mais peut également être ajouté à des produits dont la viscosité doit rester faible et qui peuvent nécessiter une forte émulsification. A cet égard on peut citer les préparations alimentaires à base de produits laitiers.

Le caséinate de sodium présente des propriétés tout à fait intéressantes en tant qu'agent moussant et peut être conseillé pour obtenir des préparations à structure ferme et pour des préparations contenant une plus forte proportion de lipides. En particulier pour des produits ayant une teneur en lipides d'environ 20% ce caséinate de sodium peut s'avérer particulièrement avantageux.

L'isolat de pois est un agent moussant inférieur au caséinate de sodium mais il permet d'obtenir une mousse plus stable.

Les agents stabilisants de texture peuvent être choisis parmi le xanthane, la guar, les carraghénanes, ces agents stabilisants étant présents dans une proportion d'environ 0,1 à 1% de façon particulièrement avantageuse environ 0,5% en poids total. De préférence on mettra en oeuvre un mélange de carraghénanes et de maltodextrines par exemple de maltodextrines commercialisées sous la marque Passeli SA2. Ces constituants pourront par exemple être présents en proportions telles que les carraghénanes sont en quantité moindre par rapport aux maltodextrines. De façon particulièrement avantageuse on pourra utiliser une partie de carraghénanes pour 4 parties en poids de maltodextrines.

Le Passeli SA2 ou tout autre constituant adapté notamment parmi les maltodextrines, peut être substitué à une certaine quantité de matières grasses, par exemple de l'ordre de 50%.

Une préparation particulièrement avantageuse est celle qui est caractérisée en ce qu'elle comprend :
- entre 0,5 et 2% en poids, de préférence entre 1 et 1,5% de caséinate de sodium,
- entre 0,5 et 2% en poids, de préférence entre 1 et 1,5% de blanc d'oeuf en poudre,
- entre 2 et 6% en poids, de préférence entre 4 et 5% d'isolat de lactosérum,
- entre 1 et 4% en poids, de préférence 2 à 3% de maltodextrines,
- entre O,2 et 1% en poids de préférence 0,5% de carraghénanes.

Dans le cas où l'eau remplace en partie les lipides, le pourcentage de carraghénanes est avantageusement inférieur à 1% de préférence autour de 0,5%.

On pourra avantageusement ajouter des agents gélifiants choisis notamment parmi les alginates, l'agar, la farine de caroube, la farine de guar, la gomme adragante, la gomme arabique, les pectines, le karaya, le damar, l'acacia, la gélatine. De même des agents anti-oxydants ou une désaération du produit pourront être mis en oeuvre afin d'éviter son oxydation lorsqu'il est conditionné.

Selon la nature de la mousse stérile réalisée il peut être intéressant d'y incorporer des aliments sous forme de morceaux. Il est utile de noter que pour la stabilité et les qualités de la mousse formée notamment pour garantir les qualités bactériologiques, on utilisera avantageusement des morceaux de petite taille et de préférence en quantité inférieure à 25% en poids de la préparation globale.

D'autres composants pouvant entrer dans la réalisation de la préparation alimentaire de l'invention sont par exemple des additifs alimentaires tels que des conservateurs, des colorants, des antioxygènes, des agents émulsifiants, stabilisants, épaississants ou gélifiants. On peut également faire entrer dans la préparation alimentaire d'autres produits d'addition tels que des matières aromatisantes naturelles ou non, des édulcorants par exemple des édulcorants intenses, naturels ou de synthèse, par exemple des sucres rares, du polydextrose, du fructose, du sirop de glucose, du sorbitol, du glycérol, du manitol, des exhausteurs de goût, des liants, des ferments, des homogénéisants, des produits annexes en quantité moindre (alcool, ...) susceptibles d'intervenir dans la fabrication habituelle des aliments. On peut aussi ajouter à la préparation, des arômes naturels, artificiels par exemple sur support d'alcool, des enzymes digestives, des fibres alimentaires végétales, des pseudo-graisses comme les calofats, des cyclodextrines, des correcteurs d'acidité.

Une préparation alimentaire particulièrement préférée selon l'invention correspond à la définition suivante :

| Jambon blanc | 25% en poids |
|---|---|
| Gras mou pré-cuit | 15 |
| Bouillon chaud | 41,738 |
| Caséinate 116 | 1,23 |
| Blanc oeuf poudre | 1,285 |
| Isolat de lactosérum | 4,667 |
| Passeli SA2 (maltodextrines) | 2 |
| Carraghénanes (épaississant, gélifiant) | 0,5 |
| Gelée AT 500 (gélatine) | 1,5 |
| Arôme jambon | 1 |
| Sel fin | 0,6 |
| Dextrose ou glucose | 0,5 |
| Pluraline 20 (sirop de glucose DE20) | 0,5 |
| Tari K7 (cuisson) polyphosphate | 0,3 |
| Ascorbate de sodium | 0,03 |
| Glutamate (exhausteur de goût) | 0,15 |
| Poivre | 0,10 |
| Oignon poudre | 0,10 |
| Foie de porc | 2 |
| Porto rouge | 1,5 |
| Carmin | 0,3 |

Il est important de constater que les produits foisonnés selon l'invention sont des produits stériles se conservant à température ambiante, sous diverses formes, par exemple dans un conditionnement plastique.

Cette mousse de jambon comprend environ 15,65% de protides, 10,20% de lipides et 4,25% de glucides.

L'invention ne se limite naturellement pas à la réalisation de mousse de jambon telle qu'elle a été décrite plus haut. Au contraire les moyens de l'invention peuvent être utilisés pour fabriquer des produits telles que les mousses de foie de volaille, de foie gras, de volaille, de poisson, etc, ou tout produit de charcuterie que l'on souhaiterait par exemple présenter sous forme tartinable. On peut également utiliser les moyens de l'invention pour les préparations de mousses de légumes à partir de toutes sortes de légumes.

L'invention comprend également des préparations alimentaires éventuellement de type diététique, qui s'apparentent aux plats cuisinés et comprenant des mélanges à base de viandes et de légumes, les mousses étant élaborées d'après la base de la cuisine traditionnelle. Ainsi on peut préparer des mousses de blanquette de veau, de boeuf aux carottes, de porc, de dindonneau, de poisson ou autre, ces mousses pouvant le cas échéant comprendre des morceaux. Dans le domaine des produits laitiers, les préparations alimentaires de l'invention comprennent des produits de type fromage pouvant être tartinés, des mousses comportant des fruits (poires, fraises, etc) et des ingrédients tels que du chocolat.

Tous ces produits sont destinés à l'alimentation courante ainsi qu'à l'alimentation spécifique des bébés, des sportifs ou encore des personnes âgées. De plus le caractère stérile des préparations de l'invention permet leur utilisation en milieu hospitalier.

L'incorporation des ingrédients dans la préparation alimentaire de l'invention sera également réalisée en fonction de la consistance recherchée pour la mousse. Par exemple des mousses élaborées avec de fortes concentrations de protéines sont plus fines, plus denses et généralement plus stables. De même le pH de la composition peut influencer le comportement des protéines en solution et par conséquent la stabilité de la mousse. A cet égard il peut être intéressant d'élaborer des mousses alimentaires dont le pH serait voisin du point isolélectrique (pI) des protéines utilisées.

De même la proportion de sucre peut influencer le degré de foisonnement; l'addition de sucre diminue le foisonnement mais peut apporter une amélioration de la stabilité. La quantité de sucre peut donc être évaluée en fonction de la nature des autres constituants notamment des protéines, les sucres pouvant avoir une action sur les protéines basiques et acides.

L'invention sera également mieux comprise à la lecture de la description qui suit d'un mode particulier de réalisation du procédé et du dispositif, donné à titre d'exemple non limitatif.

La description se réfère aux dessins qui l'accompagnent dans lesquels :

- La figure 1 est un schéma de principe, sous forme de blocs, du procédé de fabrication et de conditionnement d'une préparation alimentaire foisonnée stérile selon l'invention.
- La figure 2 est un schéma de principe montrant plus précisémment les étapes d'un mode de réalisation avantageux du conditionnement de la préparation alimentaire foisonnée stérile, selon l'invention.
- La figure 3 est un schéma de fonctionnement d'un dispositif de fabrication d'une préparation alimentaire foisonnée stérile, selon le mode de réalisation de l'invention plus particulièrement décrit ici.
- La figure 4 est une vue en coupe, de principe, d'un échangeur de chaleur à surface raclée, du type utilisé dans l'invention.

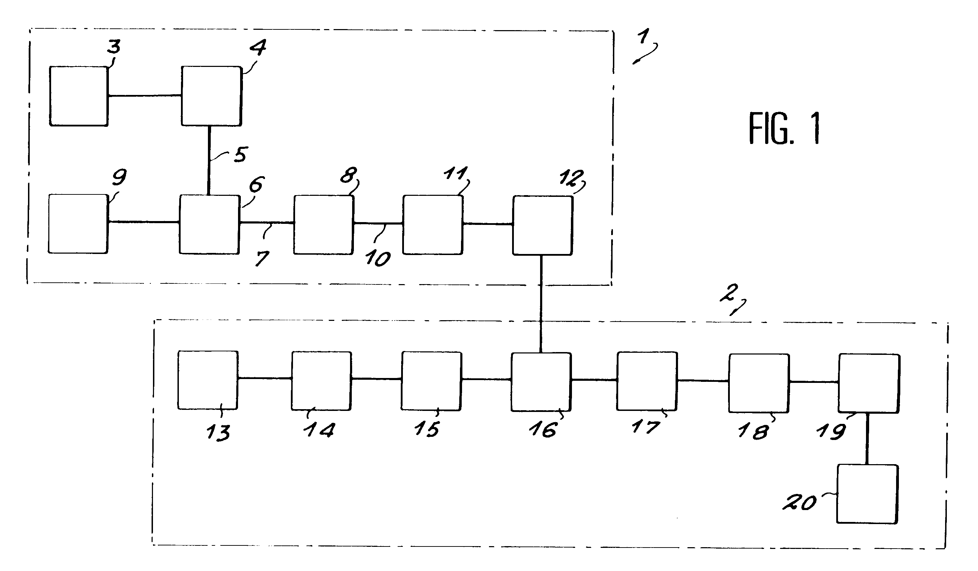

La figure 1 donne les étapes principales suivies dans le mode de réalisation du procédé selon l'invention plus particulièrement décrit ici.

Le procédé comprend deux phases, une phase 1 de fabrication de la préparation alimentaire, et une phase 2 de conditionnement de cette préparation.

Afin d'illustrer ces différentes étapes, il est donné ci-après et de façon nullement limitative, l'exemple de la fabrication et du conditionnement d'une mousse particulière de jambon telle que définie précédemment, servant de produit de base pour différentes gammes de préparations.

La phase 1 comprend une première étape 3 de prétraitement des matières premières.

Il s'agit dans l'exemple choisi, des opérations suivantes :

- cubage et pochage pendant de l'ordre de 30 mn à une température voisine de 85° C, du gras mou,
- cubage du jambon,
- mélange de la gelée AT500, avec l'arome de jambon dans 1/3 de bouillon chaud (c'est-à-dire 1/3 du volume total de bouillon prévu) à de l'ordre de 60 ou 70° C,
- cubage du foie de porc.

La gelée connue sous la dénomination AT500 est de la gélatine.

Par cubage, il faut entendre un découpage en forme de petits cubes d'arête de dimension inférieure à de l'ordre de 5cm, par exemple de 2 à 3 cm.

L'étape de prétraitement est suivie d'une étape d'élaboration de la pâte 4, ou mélée, comprenant un hachage s'il y a lieu des produits alimentaires et un mélange avec les agents moussant et stabilisant dissous et/ou mélangés avec un liquide chaud.

Dans l'exemple de la mousse de jambon, on réalise ainsi les opérations suivantes :

- hachage des gras pochés avec 1/3 de bouillon chaud (60 à 70°C) mélangé aux agents moussants (caséinate 16, blanc d'oeuf, poudre et isolat de lactoserum) pendant 2mn, à grande vitesse (3000 rpm [rotation par minute]) dans un appareil de hachage dit "cutter", par exemple un cutter fabriqué par la Société MANURHIN du type CSV 603;
- mélange et hachage des viandes (foie + jambon) avec le mélange de gelée AT500 et d'arôme de jambon préparé à l'étape précédente, et les différents assaisonnements prévus, pendant par exemple 3 mn à grande vitesse (vitesse des couteaux du cutter 3000 rpm).
- Ajout des agents stabilisants (maltodextrines, Carraghénanes) et du restant de bouillon (1/3) et mélange à nouveau pendant de l'ordre de 3 mn, à grande vitesse. On peut également ajouter du porto et du carmin à ce stade.

La pâte de jambon obtenue étant très moussante, il est nécessaire de prévoir un remplissage de la cuve de la cutter en conséquence, par exemple de 40% seulement du volume nominal. La température de la pâte à la sortie de l'étape de prétraitement est par exemple de l'ordre de 30° à 60°C, et avantageusement 40°C

On alimente en continu (liaison 5), avec la pâte préparée en 4, un premier échangeur à surface raclée; la pâte est alors brassée dans l'échangeur (étape 6) pendant un premier temps déterminé, à une première température.

Toujours dans l'exemple illustrant l'invention, la première température sera par exemple de l'ordre de 70°C, le brassage étant effectué à une vitesse de rotation comprise entre 200 et 1100 rpm, par exemple de 500 rpm, pendant une durée moyenne de l'ordre de 1 à 3 mn, par exemple 2 mn.

On alimente ensuite en continu (liaison 7) avec la pâte, un deuxième échangeur à surface raclée où l'on brasse ladite pâte (étape 8) pendant un deuxième temps déterminé, à une deuxième température.

Dans l'exemple, la deuxième température sera par exemple 125° C, la pâte étant brassée à une vitesse comprise entre 200 et 1100 rpm, par exemple 1100 rpm, également pendant de l'ordre de 1 à 3 minutes, avantageusement 2 mn.

Simultanément au traitement thermique de stérilisation et de cuisson de la pâte en 6 et en 8, on injecte en continu (étape 9), un gaz inerte dans la pâte en amont et/ou en aval du premier et/ou du deuxième échangeur avec un débit déterminé.

Dans l'exemple, le débit de gaz inerte qui est par exemple de l'azote, est un débit constant de l'ordre de 2 l/mn pour 100 kg de pâte. Mais ce débit peut, par exemple, aller jusqu'à 10 l/mn pour 100 kg de pâte dans d'autres applications.

On alimente enfin en continu (liaison 10) avec la pâte, un troisième échangeur à surface raclée, où on brasse (étape 11) la pâte pendant un troisième temps déterminé, en refroidissant la pâte à une troisième température.

Toujours dans le cas particulier de la mousse de jambon de l'exemple, la troisième température sera par exemple de l'ordre de 15 à 30° C, la vitesse de brassage étant comprise entre 200 et 1100 rpm, et de l'ordre de 500 rpm dans l'exemple plus particulièrement décrit, et la durée moyenne de traitement, (troisième temps déterminé) étant de l'ordre de 2 à 4 mn, par exemple 3 mn.

A la sortie de l'étape 11, on obtient une préparation alimentaire foisonnée stérile.

Cette préparation est acheminée (étape 12) en milieu aseptique, immédiatement après refroidissement, à une unité de conditionnement, de façon à éviter toute contamination.

On va maintenant décrire la phase de conditionnement 2 de la préparation alimentaire, sans qu'il soit nécessaire, cette fois ci, d'illustrer plus précisémment par l'exemple sur la mousse de jambon, les étapes du procédé.

Le conditionnement est par exemple réalisé dans des récipients en matière plastique, par exemple en styrène, polypropylène, polyéthylène, ou encore en aluminium, ou tout autre matériau approprié faisant une barrière étanche à l'oxygène.

On alimente tout d'abord (étape 13), l'unité de conditionnement avec les récipients, par exemple avec une cadence de 150 récipients à la minute, dépendant bien entendu des autres paramètres d'utilisation et notamment du débit de préparation foisonnée stérile à conditionner.

Les récipients sont stérilisés en 14, séchés en 15, remplis en 16 avec la préparation foisonnée stérile, de façon automatique et séquencielle, à une cadence fonction du débit de ladite préparation foisonnée acheminée en 12. La liaison entre phase 1 et phase 2 se fait par exemple par l'intermédiaire d'une tuyauterie alimentant un réservoir tampon de rupture entre le débit continu en amont de la phase 1, et le débit discontinu en aval de la phase 2, discontinuité due au remplissage des récipients, par exemple par série, chacun étant rempli d'une dose volumétrique déterminée.

Une fois une série de récipients remplis, on met les couvercles (étape 17) en injectant un gaz inerte entre la surface supérieure de la préparation présente dans les récipients et la face inférieure des couvercles, puis on scelle les couvercles (étape 18), on marque les récipients (étape 19), si nécessaire, et on stoque lesdits récipients (étape 20), sans obligation de les réfrigérer puisque la préparation foisonnée est stérile.

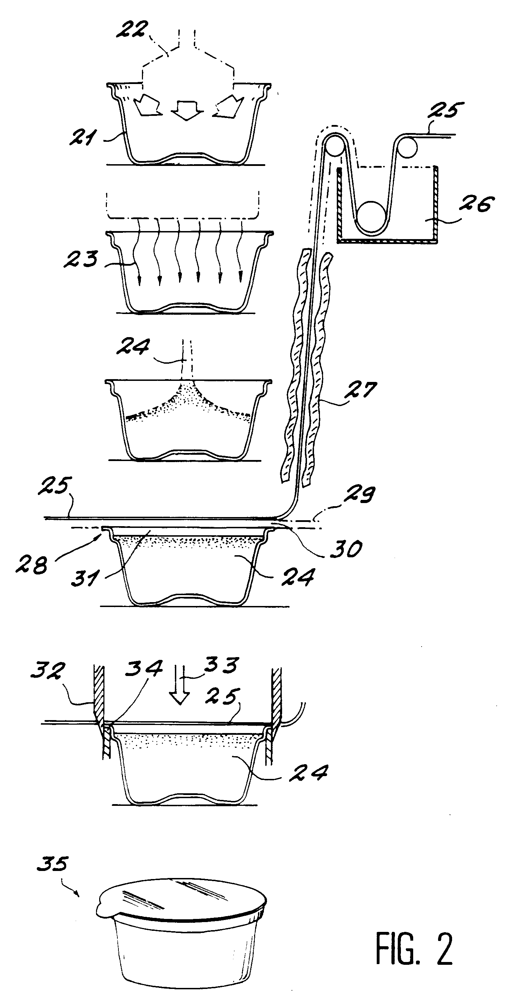

Sur la figure 2, on a représenté de façon plus détaillée, les étapes principales du mode de réalisation du procédé de conditionnement (phase 2) plus particulièrement décrit ici.

Ce procédé connu dans le cadre de conditionnement plus classique, n'avait cependant jamais été utilisé pour conditionner des mousses foisonnées stériles.

Chaque récipient 21 est aspergé intérieurement par un jet 22 d'eau oxygénée $H_2O_2$ pour stérilisation (étape 14). Le récipient est ensuite séché à l'air chaud 23 (étape 15) puis rempli par la préparation alimentaire 24 (étape 16).

Le couvercle 25, alimenté sous forme de ruban est stérilisé par passage dans un bain 26 d'eau oxygénée, séché par un rideau d'air chaud 27, et étalé au-dessus de la partie supérieure 28 du récipient 21, à un ou deux millimètres de distance du dessus du récipient.

Un gaz inerte, par exemple de l'azote, est injecté en 29 entre la partie supérieure 28 et la face inférieure 30 du couvercle, de façon à constituer une couche 31 d'isolement. On scelle ensuite (étape 18) le couvercle, en l'occurence ici par thermo-scellage, par un dispositif 32 connu en lui-même, venant appliquer une pression 33 sur la périphérie 34 du récipient via le couvercle qu'il soude simultanément.

On obtient ainsi une portion 35 de préparation foisonnée stérile conditionnée, de longue conservation à température ambiante.

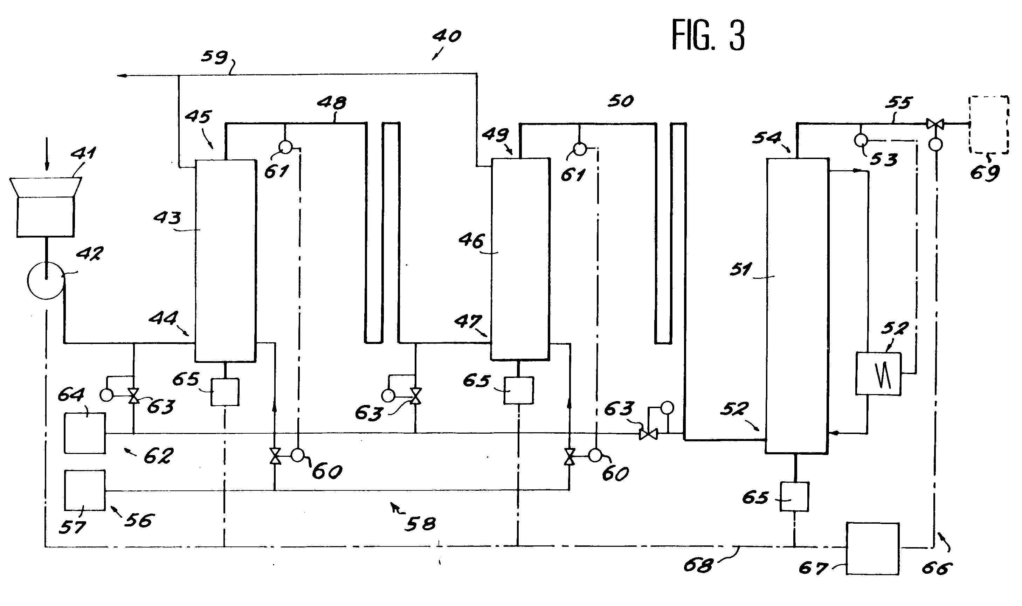

La figure 3 est un schéma de fonctionnement d'un dispositif 40 de fabrication d'une préparation foisonnée stérile, selon le mode de réalisation de l'invention plus particulièrement décrit ici.

Le dispositif comprend une trémie 41 d'alimentation de la pâte préalablement préparée dans les étapes 3 et 4.

La pâte est aspirée par la pompe 42 qui alimente en pression, par exemple à 5 bars, et en continu à un débit déterminé, par exemple 150 kg/h, un premier échangeur 43 vertical, à surface raclée, en partie basse 44 dudit échangeur.

La pâte est brassée et chauffée à une température comprise entre de l'ordre de 40°C et de l'ordre de 80°C, pendant un temps de quelques minutes et ressort de l'échangeur 43 en partie haute 45 dudit échangeur pour alimenter un deuxième échangeur vertical 46 à surface raclée en partie basse 47 dudit échangeur, via une tuyauterie 48.

La pâte est à nouveau brassée et chauffée dans l'échangeur 46, à une température cette fois comprise entre de l'ordre de 100°C et de l'ordre de 130°C pendant un deuxième temps déterminé de durée correspondant au premier. Elle ressort en partie haute 49 de l'échangeur et alimente via une deuxième tuyauterie 50, un troisième échangeur vertical 51 à surface raclée, muni cette fois-ci de moyens de refroidissements 52 de la pâte à une température inférieure à de l'ordre de 40°C. Les moyens de refroidissement sont régulés de façon connue en elle-même en étant par exemple asservis à la température de sortie de la pâte, obtenue grâce à un thermomètre 53.

Les tuyauteries 48 et 50 sont, notamment et par exemple, agencés pour créer des pertes de charges dans le dispositif et obtenir ainsi une vitesse de la pâte dans ledit dispositif correspondant aux durées de traitement thermique recherchés et nécessaires, d'une part à la destruction bactérienne adaptée et, d'autre part à l'obtention d'un goût de cuit pour la préparation alimentaire. Il existe, également, d'autres moyens pour régler la vitesse de la pâte, notamment et par exemple en utilisant une pompe de gavage 42, à vitesse variable.

La préparation alimentaire obtenue en partie haute 54 de l'échangeur 51, alimente, via la tuyauterie 55, l'unité de conditionnement.

Le dispositif comporte des moyens 56 de chauffage des échangeurs 43 et 46, comprenant par exemple une centrale 57 de fourniture de vapeur à 150°C qui alimente en vapeur les échangeurs, en partie basse, via le réseau d'alimentation 58, la vapeur refroidie étant évacuée en partie haute des échangeurs par les tuyauteries 59.

Des vannes télécommandées 60, asservies à des mesures de température 61 (thermostats), disposées par exemple en aval de chacun des deux échangeurs, permettent de réguler la température moyenne de la pâte dans les échangeurs, de façon connue en soi.

Le dispositif comprend également des moyens 62 d'injection d'un gaz neutre (azote par exemple) dans la pâte par exemple au niveau de l'alimentation en pâte, en partie basse de chaque échangeur via des vannes de régulation télécommandées 63, et comprenant un appareil 64 d'alimentation en azote. L'injection s'effectue par exemple perpendiculairement au flux de pâte, en utilisant un cathéter de diamètre interne 2mm, un injecteur fritté, ou une aiguille de saumure, à un débit de quelques litres minutes, par exemple 2 l/mn.

Enfin, chaque échangeur est muni d'un moteur rotatif 65 d'actionnement des lames de raclage en rotation.

Le dispositif 40 comporte des moyens 66 de commande et de réglage des différents organes de fonctionnement du procédé comprenant un automate 67 programmable.

Les liaisons 68 de commande de cet automate sont représentées en trait mixte sur la figure 3.

Des liaisons entrées-sorties existent également entre cet automate et l'unité de conditionnement, ce qui permet un fonctionnement harmonieux de l'ensemble du dispositif plus particulièrement décrit ici.

Enfin, le dispositif comprend des moyens d'acheminement (non représentés) à l'unité de conditionnement 69, de la préparation foisonnée stérile obtenue en 55.

Ces moyens comportent par exemple une pompe de reprise (non représentée) en série sur la tuyauterie 55. Les éléments constitutifs de l'unité de conditionnement sont, par ailleurs, connus en soi et aisément reproductibles à partir de la description du procédé ci-avant.

L'unité de conditionnement peut par exemple être constituée par un appareil de la Société anglaise METALBOX ENGINEERING, mettant en oeuvre un procédé du type décrit en référence à la figure 2, sous la référence catalogue Freshfill [R] ML4.

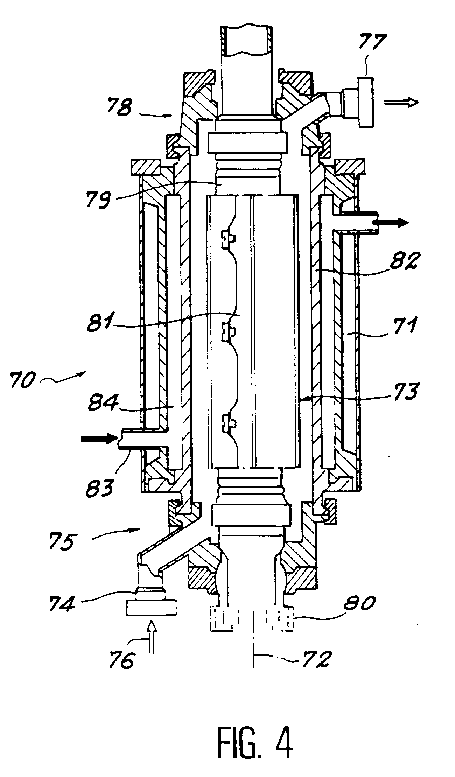

Enfin, on a représenté sur la figure 4, un exemple d'échangeur 70 à surface raclée verticale utilisable dans l'invention.

Ce type d'échangeur est, par exemple, fabriqué par la Sté française DUPRAT.

Il comporte un corps 71 allongé autour d'un axe 72, muni d'une enceinte interne cylindrique 73 axiale, comprenant une entrée 74, en partie inférieure 75 de l'échangeur, pour la pâte 76, et une sortie 77 en partie supérieure 78.

L'échangeur comporte un rotor cylindrique axial 79 disposé dans l'enceinte 73, actionné en rotation par un moteur 80 et muni de lames 81 de brassage de la pâte injectée dans l'enceinte.

La paroi cylindrique 82 externe de l'enceinte est, par ailleurs, une paroi d'échange thermique avec un fluide caloporteur 83 qui circule dans une enveloppe externe 84 de l'échangeur.

Le fonctionnement du dispositif selon l'invention, va maintenant être décrit, en faisant référence, à titre d'exemple, à la fabrication et au conditionnement de la mousse de jambon foisonnée stérile déjà considérée plus particulièrement ci-avant.

On se reportera notamment à la figure 1.

Afin de pouvoir assurer un traitement thermique et un conditionnement adapté, il est nécessaire, avant toute utilisation, de réaliser une opération de nettoyage/désinfection de l'ensemble du dispositif utilisé.

A titre d'exemple nullement limitatif, on réalisera notamment, pour nettoyer le dispositif de fabrication de la préparation alimentaire foisonnée stérile et les moyens de transfert vers l'unité de conditionnement, les opérations suivantes :

- lavage à la soude pendant 30 mn à co-courant à de l'ordre de 120 l/h de débit.
- rinçage pendant 10 mn à l'eau, par exemple à de l'ordre de 200 l/h.
- traitement à l'acide chloridrique pendant 30 mn à co-courant, à de l'ordre de 120 l heure.
- rinçage pendant 10 mn à l'eau à 200 l/ h.
- traitement à la vapeur (par exemple à de l'ordre de 0,1 bar de pression) à contre courant pendant 30 minutes et,
- rinçage à l'azote à co-courant pendant 30 minutes.

Après ce traitement, il sera bien entendu nécessaire de ne plus laisser pénétrer d'air ou de contamination dans le système, constitué par le dispositif de fabrication proprement dit et les moyens d'alimentation de l'unité de conditionnement.

La sortie de la préparation alimentaire foisonnée stérile au niveau de l'alimentation des récipients est, par ailleurs, également soigneusement décontaminée.

Après préparation de la pâte comme indiqué ci-dessus, on alimente en continu ou par "batch" la trémie 41 (voir figure 3).

La pompe de gavage 42 pousse alors la pâte par exemple à un débit de 150 l/h dans le premier échangeur 43 à surface raclée où elle est chauffée à une température de l'ordre de 70° par l'intermédiaire du circuit de vapeur 58 pendant une durée moyenne de traitement de 2 mn avec une vitesse de rotation des couteaux de l'ordre de 500 tours/minute dans le cadre, par exemple, de l'utilisation d'un échangeur à surface raclée de volume mort interne de 5,2l.

La pâte sort à une température par exemple de l'ordre de 65°C au niveau de la tuyauterie 48 (volume interne par exemple : 2,6l), qu'elle parcourt pendant une durée moyenne de l'ordre de 1 minute avant de pénétrer par le bas dans l'échangeur 46 à surface raclée, identique à l'échangeur 43. Celui-ci chauffe la pâte à une température de l'ordre de 125°C tout en la brassant à une vitesse de l'ordre de 1100 t/mn et pendant une durée moyenne de traitement de 2mn.

La pâte sort ensuite de l'échangeur 46 par le haut et parcourt la tuyauterie 50 (volume interne par exemple 4 l), pendant une durée de l'ordre de 1 minute 30 secondes avant d'atteindre le troisième échangeur 51.

Les températures des échangeurs 43 et 46 sont régulées, comme on l'a vu, via l'alimentation en vapeur de leur double enveloppe par le réseau 58.

La régulation s'effectue au niveau des tuyauteries par l'intermédiaire de thermostats réglés en fonction des températures recherchées dans les échangeurs.

La pâte rentre ensuite dans l'échangeur de refroidissement à surface raclée 51 lui-même alimenté en eau froide par le circuit et l'échangeur 52.

La pâte est traitée dans cet échangeur 51 pendant une durée moyenne de 3 mn à une température de l'ordre de 20°C, la pâte étant brassée avec une vitesse de rotation de 500 t/mn.

Ce troisième échangeur présente un volume mort interne de 7,8l et une surface d'échange égale à de l'ordre de 1,5 fois la surface d'échange des échangeurs 43 et 46.

De façon générale, dans le mode de réalisation de l'invention plus particulièrement décrit ici, le premier échangeur ($E_1$) aura un volume interne ou sensiblement identique de $vm^3$, le deuxième échangeur ($E_2$), un volume interne identique de $vM^3$, le troisième échangeur ($E_3$), un volume interne de $1,5 \times vm^3$, les liaisons entre échangeur ayant pour volume : liaison $E_1$-$E_2$ : de 0,1 à 1 $vm^3$ soit par exemple 0,5 $xm3$ et liaison $E_2$-$E_3$ : de 0,1 à 1 $vm^3$, soit par exemple 0,75 $vm^3$.

12

La pâte sort de l'échangeur 51 à une température de l'ordre de 20°C, régulée via un thermostat 53 èt la vanne de régulation correspondante et est évacuée par la tuyauterie d'évacuation 55, vers l'unité de conditionnement 69.

La préparation alimentaire stérile est reprise en continu par l'intermédiaire d'une pompe (non représentée) qui vient alimenter un bac sous atmosphère stérile. Le bac alimente, de façon dosée par l'intermédiaire par exemple de cinq petites pompes doseuses d'alimentation, les récipients préalablement stérilisés et présentés de façon automatique sous les pompes doseuses. Les récipients sont par exemple de contenance 50 cm3.

Ils sont ensuite scellés thermiquement et évacués sur un tapis roulant de façon connue en soi.

Comme il va de soi et comme il résulte d'ailleurs de ce qui précède, l'invention ne se limite nullement au mode de réalisation plus particulièrement décrit ici. Elle en englobe au contraire toutes les variantes et notamment celles où les échangeurs ne sont pas disposés verticalement mais horizontalement, où encore celles où la stérilisation des récipients est effectuée de façon différente de celle qui a été plus particulièrement décrite ci-avant.

D'autres préparations alimentaires peuvent être obtenues. On peut par exemple préparer des mousses de poisson en remplaçant le carmin par du papirka (0,3%) ou des mousses de carottes contenant : 30% de carottes précuites (vian de 25%), 10% de gras au lieu de 15%, 0,2% d'un arôme de type 76974 GIVAUDAN (extrait naturel de carotte), 0,3% de paprika.

## Revendications

**1.** Procédé de fabrication d'une préparation foisonnée stérile à base d'au moins un produit alimentaire, caractérisé en ce que

à partir d'une pâte préparée en mélangeant le produit alimentaire, préalablement haché s'il y a lieu, avec une base foisonnante comprenant au moins un agent tensio-actif moussant et au moins un agent stabilisant de texture,

on réalise un traitement thermique de destruction bactérienne et de cuisson de la pâte comprenant une étape (8) de brassage dans un échangeur (46) à surface raclée de ladite pâte en la chauffant à une température comprise entre de l'ordre de 100°C et de l'ordre de 130°C pendant un temps déterminé, en injectant un gaz dans ladite pâte pendant ledit traitement thermique, pour obtenir une préparation foisonnée stérile,

puis on refroidit (11) la préparation à une température inférieure à de l'ordre de 40°C,

les agents étant dans des proportions telles que, compte tenu des quantités de gaz injecté et de pâte mises en oeuvre, la préparation foisonnée formée après refroidissement a une densité par rapport à l'eau inférieure à 1, de préférence entre 0,9 et 0,3, et de façon particulièrement avantageuse inférieure à 0,7,

et on conditionne (2) ladite préparation foisonnée après refroidissement dans des récipients (21) préalablement stérilisés (14), que l'on scelle ensuite de façon hermétique et stérile (17, 18), de sorte qu'on obtient ainsi des portions (35) de préparation foisonnée stérile conditionnées, de longue conservation à température ambiante.

**2.** Procédé de fabrication selon la revendication 1, caractérisé en ce que

le traitement thermique de destruction bactérienne et de cuisson comprend une première étape (6) où on brasse la pâte alimentée en continu dans un premier échangeur (43) à surface raclée, en chauffant la dite pâte à une température comprise entre de l'ordre de 50°C et de l'ordre de 80°C, pendant un premier temps déterminé,

et une deuxième étape (8) où on brasse ladite pâte alimentée en continu à partir du premier échangeur, dans un deuxième échangeur (46) à surface raclée, en chauffant la pâte à la dite température comprise entre 100°C et 130°C, pendant un deuxième temps déterminé,

le refroidissement (11) étant effectué dans un troisième échangeur à surface raclé, alimenté en continu à partir du deuxième échangeur (51), où on brasse la pâte pendant un troisième temps déterminé.

**3.** Procédé de fabrication selon l'une quelconque des revendications précédentes caractérisé en ce que lesdits temps déterminés sont compris entre de l'ordre de 1 mn et de l'ordre de 5 mn.

**4.** Procédé de fabrication en continu d'une préparation foisonnée à base d'au moins un produit alimentaire, dans lequel

on forme (3, 4) une pâte en mélangeant le produit alimentaire, préalablement haché s'il y a lieu, avec une base foisonnante comprenant au moins un agent tensio-actif moussant et au moins un agent stabilisant de texture choisi notamment parmi les gommes,

on alimente (5) en continu avec ladite pâte un premier échangeur (43) de chaleur à surface raclée, où on brasse (6) ladite pâte pendant un premier temps déterminé en chauffant la pâte à une première température,

on alimente (7) ensuite en continu avec la pâte ainsi obtenue un deuxième échangeur (46) de chaleur à surface raclée, où on brasse (8) ladite pâte ainsi obtenue pendant un deuxième temps déterminé en chauffant la pâte à une deuxième température,

on injecte (9) en continu un gaz inerte dans la pâte simultanément à son alimentation, en amont et/ou en aval du premier et/ou du deuxième échangeur, avec un débit déterminé fonction du débit d'alimentation de ladite pâte,

puis on alimente (10)en continu avec la pâte un troisième échangeur (51) de chaleur à surface raclée, où on brasse (11) ladite pâte pendant un troisième temps déterminé en refroidissant la pâte à une troisième température,

ledit procédé étant caractérisé

en ce que les agents sont dans des proportions telles que, compte tenu des quantités de gaz injecté et de pâte mises en oeuvre, la préparation foisonnée formée après refroidissement a une densité par rapport à l'eau inférieure à 1, de préférence entre 0,9 et 0,3, et de façon particulièrement avantageuse inférieure à 0,7,

en ce que la première température est comprise entre de l'ordre de 50°C et de l'ordre de 80°C, la deuxième température est comprise entre de l'ordre de 100°C et de l'ordre de 130°C,

et la troisième température est comprise entre de l'ordre de 10°C et de l'ordre de 40°C, lesdits temps déterminés, de durée moyenne de brassage, étant compris entre de l'ordre de 1mn et de l'ordre de 5 mn,

de sorte qu'on obtient une préparation foisonnée stérile à partir de ladite pâte,

et en ce que on achemine (12) en milieu aseptique ladite préparation foisonnée stérile, immédiatement après refroidissement, à une unité de conditionnement située à proximité dudit troisième échangeur,

on conditionne (16, 17, 18) la préparation, en alimentant (13, 14, 15) automatiquement en milieu aseptique avec ladite préparation, des récipients préalablement stérilisés, scellés ensuite de façon hermétique et stérile,

de sorte qu'on obtient ainsi des portions (35) de préparation foisonnée stérile conditionnées, de longue conservation à température ambiante.

5. Procédé de fabrication d'une préparation foisonnée à base d'au moins un produit alimentaire selon l'une quelconque des revendications précédentes, caractérisé en ce que le produit alimentaire est carné.

6. Procédé selon l'une quelconque des revendications précédentes, caractérisé en ce que la deuxième température est supérieure à 120°C, et avantageusement égale à de l'ordre de 125°C.

7. Procédé selon l'une quelconque des revendications précédentes, caractérisé en ce que la base foisonnante comprend plusieurs agents tensio-actifs moussants choisis parmi le caséinate de sodium, le blanc d'oeuf, l'isolat de lactosérum, l'isolat de soja, l'isolat de pois, le lait écrémé en poudre, le plasma de sang de porc en poudre, de préférence de façon à ce que la quantité de protéines pures apportée soit inférieure à 10%, et avantageusement égale à de l'ordre de 6% en poids total de la préparation.

8. Procédé selon l'une quelconque des revendications précédentes, caractérisé en ce que la base foisonnante comprend plusieurs agents stabilisants de texture choisis parmi les gommes telles que le xanthane, le guar, les carraghénanes, ces agents stabilisants étant dans une proportion d'environ 0,1 à 1%, et avantageusent 0,5% en poids total de la préparation.

9. Procédé selon l'une quelconque des revendications précédentes, caractérisé en ce que la base foisonnante comprend :
   - entre 0,5 et 2% en poids, de préférence entre 1 et 1,5% de caséinate de sodium,
   - entre 0,5 et 2% en poids, de préférence entre 1 et 1,5% de blanc d'oeuf en poudre,
   - entre 2 et 6% en poids, de préférence entre 4 et 5% d'isolat de lactosérum,

14

- entre 1 et 3% en poids, de préférence 2% de maltodextrines.
- entre 0,2 et 1% en poids, de préférence 0,5% de Carraghénanes.

**10.** Procédé de fabrication d'une mousse de jambon stérile selon la revendication 9.

**11.** Procédé de fabrication d'une préparation foisonnée selon l'une quelconque des revendications précédentes, caractérisé en ce qu'on incorpore à la pâte comprenant le produit, préalablement hachée s'il y lieu, des morceaux entiers dudit produit, avant le traitement thermique.

**12.** Dispositif de fabrication en continu d'une préparation alimentaire foisonnée à partir d'une pâte préparée en mélangeant au moins un produit alimentaire, préalablement haché s'il y a lieu, avec une base foisonnante comprenant au moins un agent tensio-actif moussant et au moins un agent stabilisant de texture, le dispositif comprenant :
- des moyens (41, 42) d'alimentation en pression et en continu à un débit déterminé, avec ladite pâte, d'un premier échangeur (43) de chaleur à surface raclée,
- deux échangeurs à surface raclée de traitement thermique et de cuisson de la pâte, savoir ledit premier échangeur (43), et un deuxième échangeur (46),
- un troisième échangeur (51) de refroidissement de la pâte, et
- des moyens (62) d'injection d'un gaz dans la pâte avec un débit déterminé fonction du débit d'alimentation de ladite pâte,

caractérisé en ce que le dispositif comprend :
- des moyens (56) de chauffage de la pâte dans le premier échangeur, à une température comprise entre de l'ordre de 40° C et de l'ordre de 80° C, dans le deuxième échangeur, à une température comprise entre de l'ordre de 100° C et de l'ordre de 130° C,
- des moyens (52) de refroidissement de la pâte dans le troisième échangeur, à une température inférieure à de l'ordre de 40° C,

de sorte qu'on obtient une préparation foisonnée stérile à partir de ladite pâte, propre à être conditionnée,
et en ce qu'il comporte
- des moyens d'acheminement en milieu aseptique de ladite préparation foisonnée stérile, immédiatement après refroidissement, à une unité (69) de conditionnement située à proximité dudit troisième échangeur,
- et ladite unité (69) de conditionnement comprenant des moyens d'alimentation automatique en milieu aseptique avec ladite préparation, de récipients (21) préalablement stérilisés et des moyens de scellement de façon automatique, hermétique et stérile desdits récipients,

de sorte qu'on obtient ainsi des portions de préparation foisonnée stérile conditionnées, dans lesdits récipients scellés, de longue conservation à température ambiante.

**13.** Application du dispositif selon la revendication 12, à la fabrication de préparation foisonnée stérile à base de produits carnés.

**14.** Dispositif selon la revendication 12, caractérisé en ce que les surfaces d'échange de chaleur, respectives, des échangeurs, sont :
- premier échangeur (43) : a x m2
- deuxième échangeur (46) : a x m2
- troisième échangeur (51):1,5 x a x m2

a étant une surface variable déterminée.

**15.** Dispositif selon l'une quelconque des revendications 12, 13 et 14, caractérisé en ce qu'il comporte de plus un quatrième échangeur de chaleur à surface raclée.

**16.** Préparation alimentaire foisonnée à base de viande, de poisson, de produit laitier, de fruit, de légume, de chocolat ou d'un mélange de ces produits, caractérisée en ce qu'elle est stérile et en ce qu'elle contient une base foisonnante comprenant :
a) un ou plusieurs agents tensio-actifs moussants, résistants à une température supérieure à 100° C, de préférence autour de 120° C choisis notamment parmi les protéines,
b) un ou plusieurs agents stabilisants de texture choisis notamment parmi les gommes, les agents a) et b) étant dans des proportions telles que la préparation alimentaire formée à une densité inférieure à 1, de préférence entre 0,9 et 0,3 et de façon particulièrement avantageuse, inférieure à 0,7.

17. Préparation alimentaire foisonnée à base de viande, de poisson, de produit laitier, de fruit, de légume, de chocolat telle qu'obtenue par,
- mélange d'un ou plusieurs de ces produits avec une base foisonnante comprenant :
a) un ou plusieurs agents tensio-actifs moussants, résistants à une température supérieure à 100°C, de préférence autour de 120°C choisis notamment parmi les protéines,
b) un ou plusieurs agents stabilisants de texture choisis notamment parmi les gommes, les agents a) et b) étant dans des proportions telles que la préparation alimentaire formée à une densité inférieure à 1, de préférence entre 0,9 et 0,3 et de façon particulièrement avantageuse, inférieure à 0,7,
- stérilisation par chauffage à une température comprise entre de l'ordre de 100°C et de l'ordre de 130°C pendant un temps supérieur à de l'ordre de 1 mn.

18. Préparation alimentaire foisonnée selon l'une quelconque des revendications 16 et 17, caractérisée en ce que la base foisonnée est à base de viande ou de poisson.

19. Préparation alimentaire foisonnée selon lune quelconque des revendications 16 à 18, caractérisée en ce qu'elle comprend une proportion d'au moins un de ces produits sous forme de morceaux.

20. Préparation alimentaire foisonnée selon l'une quelconque des revendications 16 à 19, caractérisée en ce que sa teneur en lipides est inférieure à 20% éventuellement autour de 0 et de préférence située autour de 10% en poids total.

21. Préparation alimentaire foisonnée selon l'une quelconque des revendications 16 à 20, caractérisée d'une part en ce que les agents tensio-actifs moussants sont choisis parmi le caséinate de sodium, le blanc d'oeuf, l'isolat de lactosérum, l'isolat de soja, l'isolat de pois, le lait écrémé en poudre, le plasma de sang de porc en poudre, de préférence de façon à ce que la quantité de protéines pures apportée soit inférieure à 10%, de façon particulièrement avantageuse de l'ordre de 6% en poids total, et d'autre part en ce que les agents stabilisants de texture sont des gommes telles que le xanthane, la guar, les carraghénanes, ces agents stabilisants étant présents dans une proportion d'environ 0,1 à 1% de façon particulièrement avantageuse environ 0,5% en poids total.

22. Préparation alimentaire selon l'une quelconque des revendications 16 à 21, caractérisée en ce qu'elle comprend :
- entre 0,5 et 2% en poids, de préférence entre 1 et 1,5% de caséinate de sodium,
- entre 0,5 et 2% en poids, de préférence entre 1 et 1,5% de blanc d'oeuf en poudre,
- entre 2 et 6% en poids, de préférence entre 4 et 5% d'isolat de lactosérum,
- entre 1 et 4% en poids, de préférence 2 à 3% de maltodextrines,
- entre 0,2 et 1% en poids de préférence 0,5% de Carraghénanes.

23. Préparation alimentaire selon l'une quelconque des revendications 16 à 21, caractérisée en ce qu'elle comprend en outre des gélifiants choisis notamment parmi les alginates, l'agar, la farine de caroube, la farine de guar, la gomme adragante, la gomme arabique, les pectines, le karaya, le damar, l'acacia, la gélatine.

24. Préparation alimentaire selon l'une quelconque des revendications 16 à 23, caractérisée en ce qu'il s'agit d'une mousse stérile à base de viande comprenant des morceaux, de préférence en quantité inférieure à 25% en poids total.

25. Préparation alimentaire selon l'une quelconque des revendications 16 à 24, caractérisée en ce qu'elle comprend des produits additionnels tels que des arômes, des exhausteurs de goût et des additifs alimentaires.

26. Préparation alimentaire selon l'une quelconque des revendications 16 à 25, caractérisée en ce qu'elle a la composition suivante :

| Jambon blanc | 25% en poids |
|---|---|
| Gras mou pré-cuit | 15 |
| Bouillon chaud | 41,738 |
| Caséinate 116 | 1,23 |
| Blanc oeuf poudre | 1,285 |
| Isolat de lactosérum | 4,667 |
| Passeli SA2 (maltodextrines) | 2 |
| Carraghénanes (épaississant, gélifiant) | 0,5 |
| Gelée AT 500 (gélatine) | 1,5 |
| Arôme jambon | 1 |
| Sel fin | 0,6 |
| Dextrose ou glucose | 0,5 |
| Pluraline 20 (sirop de glucose DE20) | 0,5 |
| Tari K7 (cuisson) polyphosphate | 0,3 |
| Ascorbate de sodium | 0,03 |
| Glutamate (exhausteur de goût) | 0,15 |
| Poivre | 0,10 |
| Oignon poudre | 0,10 |
| Foie de porc | 2 |
| Porto rouge | 1,5 |
| Carmin | 0,3 |

## Claims

1. Manufacturing process for a sterile expanded preparation based on at least one food preparation, characterized in that :

   on a paste prepared by mixing the food preparation,

   previously minced if necessary, with an expanding base comprising at least one 1 foaming surfactant and at least one texture-stabilizing agent,

   a thermal treatment is carried out to destroy bacteria and cook the paste which comprises a mixing step (8) of said paste in an exchanger (46) with a projection-studded surface by heating it at a temperature between about 100°C and 130°C for a defined time by injecting a gas into said paste during said thermal treatment in order to obtain a sterile expanded preparation,

   then the preparation is cooled (11) to a temperature below 40°C,

   the agents being in proportions such that, in view of the quantities of gas injected and of paste used, the expanded preparation formed after cooling has a density of less than 1,

   preferably between 0.9 and 0.3 and particularly advantageously less than 0.7,

   and the said expanded preparation is packaged (2) after cooling in previously sterilized (14) containers (21) which are then sealed hermetically and sterilely (17, 18) so that packaged portions (35) of the sterile expanded preparation are thus obtained which can be stored for long periods at room temperature.

2. Manufacturing procedure according to Claim 1, characterized in that :

   the thermal treatment for the destruction of bacteria and cooking comprises a first step (6) in which the paste fed continuously into a first exchanger with a projection-studded surface is mixed by heating said paste at a temperature between about 50°C and about 80°C for a first defined time,

   and a second step (8) in which said paste fed continuously from the first exchanger into a second exchanger (46) with a projection-studded surface is mixed by heating the paste at said temperature between 100°C and 130°C for a second defined time,

   the cooling (11) being carried out in a third exchanger with a projection-studded surface, fed continuously from the second exchanger (51), in which the paste is mixed for a third defined time.

3. Manufacturing procedure according to any one of the preceding Claims, characterized in that said defined times are included between about 1 min. and about 5 min.

17

4. Continuous manufacturing procedure of an expanded preparation based on at least one food preparation in which

a paste is formed (3, 4) by mixing the food product, previously minced if necessary, with an expanding base comprising at least one foaming surfactant and at least one texture-stabilizing agent chosen from the gums,

a first heat exchanger (43) with a projection-studded surface is fed (5) continuously with said paste in which said paste is mixed (6) for a first defined time by heating the paste at a first temperature,

a second heat exchanger (46) with a projection-studded surface is then fed (7) continuously with the paste thus obtained in which said paste thus obtained is mixed for a second defined time by heating the paste at a second temperature,

an inert gas is injected (9) continuously into the paste simultaneously with its being fed upstream and/or downstream of the first and/or second exchanger at a rate defined as a function of the rate at which said paste is fed in,

then a third heat exchanger (51) with a projection-studded surface is fed (10) continuously with the paste in which said paste is mixed (11) for a third defined time by cooling the paste to a third temperature,

said process being characterized

in that the agents are in proportions such that, in view of the quantities of gas injected and paste used, the expanded preparation formed after cooling has a density less than 1, preferably between 0.9 and 0.3 and particularly advantageously less than 0.7,

in that the first temperature is included between about 50°C and about 80°C, the second temperature is included between about 100°C and about 130°C,

and the third temperature is included between about 10°C and about 40°C,

said defined mean mixing times being included between about 1 min and about 5 min,

so that a sterile expanded preparation is obtained from said paste,

and in that said sterile expanded preparation is transported (12) in an aseptic medium immediately after cooling to a packaging unit situated near to said third exchanger,

the preparation is packaged (16, 17, 18) by feeding (13, 14, 15) automatically said preparation into previously sterilized containers, subsequently sealed hermetically and sterilely,

so that packaged portions (35) of the sterile expanded preparation are thus obtained which can be stored for long periods at room temperature.

5. Manufacturing process for an expanded preparation based on at least one food product according to any one of the preceding Claims, characterized in that the food product is a meat product.

6. Process according to any one of the preceding Claims, characterized in that the second temperature is higher than 120°C, and advantageously equal to about 125°C.

7. Process according to any one of the preceding Claims, characterized in that the expanding base comprises several leavening surfactants selected from sodium caseinate, egg white, a whey isolate, a soya isolate, a pea isolate, skimmed milk powder, powdered pig blood plasma, preferably such that the quantity of pure proteins contributed is less than 10%, and advantageously equal to about 6% of the total weight of the preparation.

8. Process according to any one of the preceding Claims, characterized in that the expanding base comprises several texture stabilizing agents selected from gums such as xanthan, guar, the carrageenins, these stabilizing agents being in a proportion of about 0.1 to 1%, and advantageously 0.5% of the total weight of the preparation.

9. Process according to any one of the preceding Claims, characterized in that the expanding base comprises :
   - between 0.5 and 2% by weight , and preferably between 1 and 1.5% of sodium caseinate,
   - between 0.5 and 2% by weight , and preferably between 1 and 1.5% of egg white powder,
   - between 2 and 6% by weight , and preferably between 4 and 5% of whey isolate
   - between 1 and 3% by weight , and preferably 2% maltodextrins
   - between 0.2 and 1% by weight , and preferably 0.5% carrageenins.

EP 0 560 873 B1

**10.** Manufacturing process of a sterile ham mousse according to Claim 9.

**11.** Manufacturing process for an expanded preparation according to any one of the preceding Claims, characterized in that whole pieces of said product are incorporated into the paste comprising the product, previously minced if necessary, prior to the thermal treatment.

**12.** Apparatus for the continuous manufacture of an expanded food preparation from a paste prepared by mixing at least one foodstuff, previously minced if necessary, with an expanding base comprising at least one foaming surfactant and at least one texture stabilizing agent, the apparatus comprising :
- devices (41, 42) for the continuous supply under pressure at a defined rate of said paste from a first heat exchanger (43) with a projection-studded surface,
- two exchangers with a projection-studded surfaces for the thermal treatment and cooking of the paste, namely said first exchanger (43) and a second exchanger (46),
- a third exchanger (51) for cooling the paste, and
- devices (62) for injection of a gas into the paste at a rate defined as a function of the rate of supply of said paste,

characterized in that the apparatus comprises :
- devices (56) for heating the paste in the first exchanger at a temperature included between about 40°C and about 80°C in the second exchanger at a temperature included between about 10°C and about 130°C,
- devices (52) for cooling the paste in the third exchanger to a temperature below about 40°C;

such that a sterile expanded preparation is obtained from said paste ready to be packaged, and in that it contains
- devices for transporting said sterile expanded preparation in a sterile medium immediately after cooling to a packaging unit (69) situated near to said third exchanger,
- and said packaging unit (69) comprising devices for the automatic supply in an aseptic medium of said preparation to previously sterilized containers (21) and devices for automatically, hermetically and sterilely sealing said containers,

so that packaged portions of the sterile expended preparation are thus obtained which can be stored for long periods at room temperature.

**13.** Use of the apparatus according to Claim 12 for the manufacture of a sterile expanded preparation based on meat products.

**14.** Apparatus according to Claim 12, characterized in that the heat exchange surface areas of the exchangers are :
- first exchanger (43) : $a \times m^2$
- second exchanger (46) : $a \times m^2$
- third exchanger (51) : $1.5 \times a \times m^2$

a being a defined variable surface area.

**15.** Apparatus according to either of the Claims 12 and 14, characterized in that it comprises additionally a fourth heat exchanger with a projection-studded surface.

**16.** Expanded food preparation based on meat, fish, milk product, fruit, vegetable, chocolate or a mixture of these products,
characterized in that it is sterile and in that it contains an expanding base comprising :
a) one or several leavening surfactants, resistant to temperatures higher than 100°C preferably about 120°C, selected in particular from proteins
b) one or more texture-stabilizing agents selected in particular from gums,
the agents a) and b) being in proportions such that the food preparation formed has a density of less than 1, preferably between 0.9 and 0.3 and particularly advantageously less than 0.7.

**17.** Expanded food preparation based on meat, fish, milk product, fruit, vegetable, chocolate such as that obtained by
- mixture of one or more of these products with an expanding base comprising :
a) one or more leavening surfactants resistant to a temperature higher than 100°C, preferably about 120°C selected in particular from proteins,

19

b) one or more texture-stabilizing agents selected in particular from gums, the agents a) and b) being in proportions such that the food preparation formed has a density of less than 1, preferably between 0.9 and 0.3 and particularly advantageously less than 0.7,
- sterilization by heating at a temperature included between about 100°C and about 130°C for a time longer than about 1 min.

18. Expanded food preparation according to any one of the Claims 16 and 17, characterized in that the expander is meat- or fish-based.

19. Expanded food preparation according to any one of the Claims 16 to 18, characterized in that it contains a proportion of at least one of these products in the form of pieces.

20. Expanded food preparation according to any one of the Claims 16 to 19, characterized in that its lipid content is less than 20%, optionally about 0 and preferably situated at about 10% of the total weight.

21. Expanded food preparation according to any one of the Claims 16 to 20, characterized on the one hand in that the foaming surfactants are selected from sodium caseinate, egg white, whey isolate, soya isolate, pea isolate skimmed milk powder, powdered pig blood serum, preferably such that the amount of pure proteins is less than 10%, particularly advantageously about 6% of the total weight, and on the other hand in that the texture-stabilizing agents are gums such as xanthan, guar, the carrageneenins, these stabilizing agents being present in a proportion of about 0.1 to 1% and particularly advantageously about 0.5% of the total weight.

22. Food preparation according to any one of the Claims 16 to 21,
    characterized in that it comprises :
    - between 0.5 and 2% by weight, and preferably between 1 and 1.5% of sodium caseinate,
    - between 0.5 and 2% by weight, and preferably between 1 and 1.5% of egg white powder,
    - between 2 and 6% by weight, and preferably between 4 and 5% of whey isolate
    - between 1 and 4% by weight, and preferably 2 to 3% maltodextrins
    - between 0.2 and 1% by weight, and preferably 0.5% carrageenins.

23. Food preparation according to any one of the Claims 16 to 21, characterized in that it additionally comprises gelling agents selected from in particular alginates, agar, carob powder, guar gum, tragacanth, gum arabic, pectins, karaya gum, dammar resin, gelatin.

24. Food preparation according to any one of the Claims 16 to 23, characterized in that it is a sterile meat-based mousse containing pieces, preferably in an amount less than 25% of the total weight.

25. Food preparation according to any one of the Claims 16 to 24, characterized in that it contains additional products such as flavours, flavour enhancers and food additives.

26. Food preparation according to any one of the Claims 16 to 25, characterized in that it has the following composition :

| Boiled ham | 25% by weight |
|---|---|
| Pre-cooked fat | 15 |
| Hot broth | 41.738 |
| Caseinate 116 | 1.23 |
| Egg white powder | 1.285 |
| Whey isolate | 4.667 |
| Passeli SA2 (maltodextrins) | 2 |
| Carrageneenins (thickener, gelling agent) | 0.5 |
| Jelly AT 500 (gelatin) | 1.5 |
| Ham flavour | 1 |
| Table salt | 0.6 |
| Dextrose or glucose | 0.5 |
| Pluraline 20 (glucose syrup DE20) | 0.5 |
| Tari K7 (cooking) polyphosphate | 0.3 |
| Sodium ascorbate | 0.03 |
| Glutamate (flavour enhancer) | 0.15 |
| Pepper | 0.10 |
| Onion powder | 0.10 |
| Pork liver | 2 |
| Red port | 1.5 |
| Cochineal | 0.3 |

**Patentansprüche**

1. Verfahren zur Herstellung einer sterilen geschäumten Zubereitung auf Basis mindestens eines Nahrungsmittelprodukts,
dadurch **gekennzeichnet**, daß man,
ausgehend von einer Paste, die hergestellt ist, indem man das Nahrungsmittelprodukt, das gegebenenfalls vorab haschiert ist, mit einem blähenden Basismittel, das mindestens ein oberflächenaktives Schäumungsmittel und mindestens ein Gefügestabilisiermittel enthält,
eine thermische Behandlung zur Zerstörung von Bakterien und zum Kochen der Paste durchführt, wobei eine Stufe (8) enthalten ist, in der die genannte Paste in einem Austauscher (46) mit Oberflächen mit Konturen unter Erwärmen auf eine Temperatur von ungefähr 100 bis ungefähr 130°C über eine bestimmte Zeitdauer zubereitet wird, wobei man ein Gas in die genannte Paste bei der genannten thermischen Behandlung injiziert, um eine sterile geschäumte Zubereitung zu erhalten,
dann die Zubereitung auf eine Temperatur unterhalb ungefähr 40°C abkühlt (11),
wobei die jeweiligen Zubereitungsmittel, bezogen auf die Mengen an injiziertem Gas und eingesetzter Paste, in solchen Mengenanteilen vorliegen, daß die gebildete geschäumte Zubereitung nach Abkühlung eine Dichte, bezogen auf Wasser, unterhalb 1, vorzugsweise von 0,9 bis 0,3 und ganz besonders bevorzugt unterhalb 0,7, aufweist,
und man (2) die genannte geschäumte Zubereitung nach der Abkühlung in vorab sterilisierten (14) Behältnissen (21) konditioniert, welche man sodann (17, 18) hermetisch und steril verschließt, und zwar so, daß man auf diese Weise konditionierte abgepackte Portionsmengen (35) mit einer bei Umgebungstemperatur langen Haltbarkeitsdauer erhält.

2. Herstellverfahren gemäß Anspruch 1,
dadurch **gekennzeichnet**, daß
die thermische Behandlung zur Zerstörung der Bakterien und zum Kochen eine erste Stufe (6), in der man die in einen ersten Anstauscher (43) mit Oberflächen mit Konturen kontinuierlich zugeführte Paste verrührt, wobei die genannte Paste bei einer Temperatur von ca. 50 bis ca. 80°C über eine festgelegte erste Zeitdauer erwärmt wird,
und eine zweite Stufe (8) umfaßt, in der man die genannte, aus dem ersten Anstauscher kontinuierlich zugeführte Paste in einem zweiten Austauscher (46) mit Oberflächen mit Konturen verrührt, wobei die Paste bei der genannten Temperatur von 100 bis 130°C über eine festgelegte zweite Zeitdauer erwärmt wird,
wobei die Abkühlung (11) in einem aus dem zweiten Austauscher kontinuierlich gespeisten dritten

EP 0 560 873 B1

Austauscher (51) durchgeführt wird, worin man die Paste über eine festgelegte dritte Zeitdauer verrührt.

3. Herstellverfahren gemäß einem der vorhergehenden Ansprüche,
dadurch **gekennzeichnet**, daß
die genannten Zeitspannen in der Größenordnung von 1 bis 5 min liegen.

4. Verfahren zur kontinuierlichen Herstellung einer geschäumten Zubereitung auf Basis mindestens eines Nahrungsmittelprodukts, wobei man
(3,4) eine Paste bildet, indem man das Nahrungsmittelprodukt, das gegebenenfalls vorab haschiert ist, mit einem blähenden Basismittel vermischt, das mindestens ein oberflächenaktives Schäumungsmittel und mindestens ein insbesondere aus Gummi-Produkten ausgewähltes Gefügestabilisierungsmittel enthält,
(5) kontinuierlich mit der genannten Paste einen konturierte Oberflächen aufweisenden ersten Wärmetauscher (43) speist, worin man (6) die genannte Paste über eine festgelegte erste Zeitdauer verrührt, wobei die Paste bei einer ersten Temperatur erwärmt wird,
(7) sodann kontinuierlich mit der so erhaltenen Paste einen konturierte Oberflächen aufweisenden zweiten Wärmetauscher (46) speist, worin man (8) die so erhaltene genannte Paste über eine festgelegte zweite Zeitdauer verrührt, wobei die Paste bei einer zweiten Temperatur erwärmt wird,
(9) kontinuierlich ein inertes Gas in die Paste gleichzeitig mit ihrer Einspeisung vor und/oder nach dem ersten und/oder zweiten Austauscher in einer Menge injiziert, die als Funktion der Einspeismenge der genannten Paste festgelegt ist,
(10) dann kontinuierlich mit der Paste einen konturierte Oberflächen aufweisenden dritten Wärmetauscher (51) speist, worin man (11) die genannte Paste über eine festgelegte dritte Zeitdauer verrührt, wobei die Paste auf eine dritte Temperatur abgekühlt wird,
wobei das genannte Verfahren
dadurch **gekennzeichnet** ist, daß
die jeweiligen Zubereitungsmittel, bezogen auf die Mengen an injiziertem Gas und eingesetzter Paste, in solchen Mengenanteilen vorliegen, daß die gebildete geschäumte Zubereitung nach der Abkühlung eine Dichte, bezogen auf Wasser, unterhalb 1, vorzugsweise von 0,9 bis 0,3, und besonders bevorzugt unterhalb 0,7, aufweist,
daß die erste Temperatur in der Größenordnung von 50 bis 80°C,
die zweite Temperatur in der Größenordnung von 100 bis 130°C,
und die dritte Temperatur in der Größenordnung von 10 bis 40°C liegen,
wobei die genannten Zeitspannen der mittleren Dauer des Verarbeitungsvorgangs in der Größenordnung von 1 bis 5 min liegen,
so daß man eine sterile geschäumte Zubereitung aus der genannten Paste erhält,
und daß man (12) die genannte sterile geschäumte Zubereitung, unmittelbar nach der Abkühlung, in aseptischem Milieu in eine Konditioniereinheit leitet, die in der Nähe des genannten dritten Austauschers angeordnet ist,
man (16, 17, 18) die Zubereitung konditioniert, wobei man (13, 14, 15) vorab sterilisierte Behältnisse in aseptischem Milieu mit der genannten Zubereitung speist, welche sodann hermetisch und steril verschlossen werden, so daß man auf diese Weise konditionierte abgepackte Portionsmengen (35) der sterilen geschäumten Zubereitung einer bei Umgebungstemperatur langen Haltbarkeitsdauer erhält.

5. Verfahren zur Herstellung einer geschäumten Zubereitung auf Basis mindestens eines Nahrungsmittelprodukts gemäß jedem der vorhergehenden Ansprüche,
dadurch **gekennzeichnet**, daß
das Nahrungsmittelprodukt ein Fleischprodukt ist.

6. Verfahren gemäß jedem der vorhergehenden Ansprüche,
dadurch **gekennzeichnet**, daß
die zweite Temperatur bei mehr als 120°C und in vorteilhafter Weise bei ca. 125°C liegt.

7. Verfahren gemäß jedem vorhergehenden Anspruch,
dadurch **gekennzeichnet**, daß
das Basismittel zum Blähen mehrere schäumende oberflächenaktive Mittel enthält, ausgewählt aus Natriumcaseinat, Eiweiß, Isolat von Lactoserum, Isolat von Soja, Isolat der Erbse, Milchsahnepulver, Blutplasmapulver vom Schwein, und zwar vorzugsweise so, daß die Menge an eingebrachten reinen

22

Proteinen unterhalb 10%, vorzugsweise gleich ca. 6%, bezogen auf das Gesamtgewicht der Zubereitung, beträgt.

8. Verfahren gemäß jedem vorhergehenden Anspruch,
dadurch **gekennzeichnet**, daß
das Basismittel zum Blähen mehrere Gefügestabilisiermittel enthält, ausgewählt aus Gummi-Produkten wie Xanthan, Guar, Karraghenanen, wobei diese Stabilisiermittel in einem Mengenanteil von ca. 0,1 bis 1%, vorzugsweise von 0,5%, bezogen auf Gesamtgewicht der Zubereitung, vorhanden sind.

9. Verfahren gemäß jedem der vorhergehenden Ansprüche,
dadurch **gekennzeichnet**, daß
das Basismittel zum Blähen umfaßt:
   - 0,5 bis 2, vorzugsweise 1 bis 1,5, Gew.% Natriumcaseinat,
   - 0,5 bis 2, vorzugsweise 1 bis 1,5, Gew.% Eiweißpulver,
   - 2 bis 6, vorzugsweise 4 is 5, Gew.% Isolat von Lactoserum,
   - 1 bis 3, vorzugsweise 2, Gew.% Maltodextrine,
   - 0,2 bis 1, vorzugsweise 0,5, Gew.% Karraghenane.

10. Verfahren gemäß Anspruch 9 zur Herstellung eines sterilen Schaums aus Schinken.

11. Verfahren zur Herstellung einer geschäumten Zubereitung gemäß jedem der vorhergehenden Ansrpüche,
dadurch **gekennzeichnet**, daß
man in die Paste, die das Produkt enthält, das gegebenenfalls vorab haschiert ist, vor der thermischen Behandlung ganze Stücke des genannten Produkts einbringt.

12. Vorrichtung zur kontinuierlichen Herstellung einer geschäumten Nahrungsmittelzubereitung aus einer Paste, die hergestellt ist, indem man mindestens ein Nahrungsmittelprodukt, das gegebenenfalls vorab haschiert ist, mit einem Basismittel zum Blähen vermischt, welches mindestens ein oberflächenaktives Schäumungsmittel und mindestens ein Gefügestabilisiermittel aufweist, wobei die Vorrichtung umfaßt:
   - Elemente (41, 42) zur Einspeisung der genannten Paste unter Druck und kontinuierlich in einer festgelegten Durchsatzmenge in einen ersten Wärmeaustauscher (43) mit konturierten Oberflächen;
   - zwei Austauscher mit konturierten Oberflächen zur thermischen Behandlung und zum Kochen der Paste, und zwar den genannten ersten Austauscher (43) und einen zweiten Austauscher (46),
   - einen dritten Austauscher (51) zum Abkühlen der Paste sowie
   - Elemente (62) zur Injektion eines Gases in die Paste mit einer Einsatzmenge, die als Funktion der Einspeismenge der genannten Paste festgelegt ist,
dadurch **gekennzeichnet**, daß
die Vorrichtung umfaßt:
   - Elemente (56) zum Erwärmen der Paste im ersten Austauscher, bei einer Temperatur in der Größenordnung von 40 bis 80°C, im zweiten Austauscher, bei einer Temperatur in der Größenordnung von 100 bis 130°C,
   - Elemente (52) zum Abkühlen der Paste im dritten Austauscher, bei einer Temperatur unterhalb ca. 40°C,
so daß man eine sterile geschäumte Zubereitung aus der genannten Paste erhält, die fertig ist,um konditioniert zu werden,
und daß die Vorrichtung ferner aufweist:
   - Zuleitungselemente in aseptischem Milieu für die genannte sterile geschäumte Zubereitung, sofort nach der Abkühlung, zu einer Konditioniereinheit (69), die in der Nähe des genannten dritten Austauschers angeordnet ist,
   - sowie die genannte Konditioniereinheit (69), umfassend Elemente zur automatisch gesteuerten Zuleitung der genannten Zubereitung in aseptischem Milieu in vorab sterilisierte Behältnisse (21) sowie Elemente zum automatisch gesteuerten, hermetischen und sterilen Verschließen der genannten Behältnisse,
so daß man auf diese Weise in den genannten verschlossenen Behältnissen konditionierte abgepackte Portionsmengen der sterilen geschäumten Zubereitung erhält, die eine lange Haltbarkeitsdauer bei Umgebungstemperatur aufweist.

**13.** Anwendung der Vorrichtung gemäß Anspruch 12 zur Herstellung einer sterilen geschäumten Zubereitung auf Basis von Fleischprodukten.

**14.** Vorrichtung gemäß Anspruch 12,
dadurch **gekennzeichnet**, daß
die jeweiligen Wärmeaustauschflächen der Austauscher Flächenabmessungen aufweisen:
- erster Austauscher (43) : a x m$^2$
- zweiter Austauscher (46): a x m$^2$
- dritter Austauscher (51): 1,5 x a x m$^2$
wobei a eine variabel festgelegte Oberflächenfläche ist.

**15.** Vorrichtung gemäß jedem der Ansprüche 12, 13 und 14,
dadurch **gekennzeichnet**, daß
sie ausserdem einen vierten Wärmeaustauscher mit konturierten Oberflächen umfaßt.

**16.** Geschäumte Nahrungsmittelzubereitung auf Basis von Fleisch, Fisch, Milchprodukt, Obst, Gemüse, Schokolade oder auf Basis einer Mischung dieser Produkte,
dadurch **gekennzeichnet**, daß
sie steril ist und ein Basismittel zur Blähschäumung enthält, das aufweist:
a) ein oder mehrere schäumende oberflächenaktive Mittel, die einer Temperatur oberhalb 100°C, vorzugsweise von ca. 120°C, standhalten, welche insbesondere aus Proteinen ausgewählt sind,
b) ein oder mehrere Gefügestabilisiermittel, ausgewählt insbesondere aus Gummi-Produkten,
wobei die Mittel a) und b) in solchen Anteilsmengen vorhanden sind, daß die gebildete Nahrungsmittelzubereitung eine Dichte unterhalb 1, vorzugsweise von 0,9 bis 0,3 und in besonders vorteilhafter Weise von unterhalb 0,7, aufweist.

**17.** Geschäumte Nahrungsmittelzubereitung auf Basis von Fleisch, Fisch, Milchprodukt, Obst, Gemüse, Schokolade, erhältlich durch
- Vermischen eines oder mehrerer dieser Produkte mit einem Basismittel zum Blähschäumen, das enthält:
a) ein oder mehrere schäumende oberflächenaktive Mittel, die einer Temperatur oberhalb 100°C, vorzugsweise von ca. 120°C, standhalten, welche insbesondere aus Proteinen ausgewählt sind,
b) ein oder mehrere Gefügestabilisiermittel, ausgewählt insbesondere aus Gummi-Produkten,
wobei die Mittel a) und b) in solchen Mengenanteilen vorhanden sind, daß die gebildete Nahrungsmittelzubereitung eine Dichte unterhalb 1, vorzugsweise von 0,9 bis 0,3 und in besonders vorteilhafter Weise unterhalb 0,7, aufweist,
- Sterilisation durch Erwärmen auf eine Temperatur in der Größenordnung von 100 bis 130°C über einen Zeitraum von mehr als ca. 1 min.

**18.** Geschäumte Nahrungsmittelzubereitung gemäß einem jeden der Ansprüche 16 und 17,
dadurch **gekennzeichnet**, daß
das schaumgeblähte Basisprodukt ein Produkt auf Basis von Fleisch oder Fisch ist.

**19.** Schaumgeblähte Nahrungsmittelzubereitung gemäß einem jeden der Ansprüche 16 bis 18,
dadurch **gekennzeichnet**, daß
sie einen Mengenanteil mindestens eines dieser Produkte in Form von Stücken aufweist.

**20.** Schaumgeblähte Nahrungsmittelzubereitung gemäß jedem der Ansprüche 16 bis 19,
dadurch **gekennzeichnet**, daß
ihr Gehalt an Lipiden unterhalb 20%, gegebenenfalls von ca. 0 und vorzugsweise von ca. 10%, bezogen auf Gesamtgewicht, beträgt.

**21.** Schaumgeblähte Nahrungsmittelzubereitung gemäß einem jeden der Ansprüche 16 bis 20,
dadurch **gekennzeichnet**, daß
einerseits die schäumenden oberflächenaktiven Mittel aus Natriumcaseinat, Eiweiß, Isolat von Lactoserum, Isolat von Soja, Isolat der Erbse, Milchsahnepulver, Blutplasmapulver vom Schwein ausgewählt sind, vorzugsweise so, daß die Menge der eingebrachten reinen Proteine unterhalb 10%, in besonders vorteilhafter Weise in einer Größenordnung von 6%, bezogen auf Gesamtgewicht, liegt, und daß andererseits die Gefügestabilisiermittel Gummiprodukte wie Xanthan, Guar, Karraghenane sind, wobei diese Stabilisiermittel in einem Mengenanteil von 0,1 bis 1, besonders vorteilhaft von ca. 0,5, %, vom Gesamtgewicht, vorhanden sind.

22. Nahrungsmittelzubereitung gemäß jedem Anspruch 16 bis 21,
dadurch **gekennzeichnet**, daß
sie aufweist:
- 0,5 bis 2, vorzugswiese 1 bis 1,5, Gew.% Natriumcaseinat,
- 0,5 bis 2, vorzugsweise 1 bis 1,5, Gew.% Eiweißpulver,
- 2 bis 6, vorzugsweise 4 bis 5, Gew.% Isolat von Lactoserum,
- 1 bis 4, vorzugsweise 2 bis 3, Gew.% Maltodextrine,
- 0,2 bis 1, vorzugsweise 0,5, Gew.% Karraghenane.

23. Nahrungsmittelzubereitung gemäß jedem Anspruch 16 bis 21,
dadurch **gekennzeichnet**, daß
sie außerdem Geliermittel enthält, ausgewählt insbesondere aus Alginaten, Agar, Johannisbrotmehl, Guarmehl, Tragacanth-Gummi, Gummi arabicum, Pectinen, Karaya, Dammar, Akazie, Gelatine.

24. Nahrungsmittelzubereitung gemäß jedem Anspruch 16 bis 23,
dadurch **gekennzeichnet**, daß
es sich um einen sterilen Schaum auf Basis von Fleisch handelt, enthaltend Stücke, vorzugsweise in einer Menge unterhalb 25% vom Gesamtgewicht.

25. Nahrungsmittelzubereitung gemäß jedem Anspruch 16 bis 24,
dadurch **gekennzeichnet**, daß
sie Zusatzprodukte wie Aromastoffe, Geschmacksverstärkungsstoffe und Nahrungsmitteladditive enthält.

26. Nahrungsmittelzubereitung gemäß jedem Anspruch 16 bis 25,
dadurch **gekennzeichnet**, daß
sie die folgende Zusammensetzung aufweist:

| | |
|---|---|
| Weißer Schinken | 25 Gew.% |
| Vorgekochtes Weichfett | 15 |
| Warmbrühe | 41,738 |
| Caseinat 116 | 1,23 |
| Eiweißpulver | 1,285 |
| Isolat von Lactoserum | 4,667 |
| Passeli SA2 (Maltodextrine) | 2 |
| Karraghenane (Verdickungs-, Geliermittel) | 0,5 |
| Gelée AT 500 (Gelatine) | 1,5 |
| Schinkenaroma | 1 |
| Feinsalz | 0,6 |
| Dextrose oder Glucose | 0,5 |
| Pluraline 20 (Sirup von Glucose DE20) | 0,5 |
| Tari K7 (Koch)-Polyphosphat | 0,3 |
| Natriumascorbat | 0,03 |
| Glutamat (Geschmacksverstärker) | 0,15 |
| Pfeffer | 0,10 |
| Zwiebelpulver | 0,10 |
| Schweineleber | 2 |
| Porto, rot | 1,5 |
| Karmin | 0,3 |

FIG. 1

EP 0 560 873 B1

FIG. 2

FIG. 3

EP 0 560 873 B1

FIG. 4